(19) **Europäisches Patentamt**

**European Patent Office**

**Office européen des brevets**

(11) Veröffentlichungsnummer: **0 281 788 B1**

(12) # EUROPÄISCHE PATENTSCHRIFT

(45) Veröffentlichungstag der Patentschrift: **20.05.92**

(51) Int. Cl.⁵: **H02M 7/62**, H02M 5/45

(21) Anmeldenummer: **88102122.4**

(22) Anmeldetag: **12.02.88**

(54) **Verfahren und Schaltungsanordnung zur entkoppelten Regelung der Komponenten eines Stromvektors.**

(30) Priorität: **25.02.87 DE 3706118**

(43) Veröffentlichungstag der Anmeldung:
**14.09.88 Patentblatt 88/37**

(45) Bekanntmachung des Hinweises auf die
Patenterteilung:
**20.05.92 Patentblatt 92/21**

(84) Benannte Vertragsstaaten:
**CH DE FR GB IT LI SE**

(56) Entgegenhaltungen:
**EP-A- 0 082 029**
**EP-A- 0 093 929**
**EP-A- 0 171 617**
**DE-A- 3 232 141**
**DE-A- 3 234 603**

**IEEE TRANSACTIONS ON INDUSTRY APPLI-
CATIONS, Band 1A-16, Nr. 2, März/April 1980,
Seiten 193-202, IEEE, New York, US; L.H.
WALKER et al.: "A high-performance
controlled-current inverter drive"**

(73) Patentinhaber: **SIEMENS AKTIENGESELL-
SCHAFT**
**Wittelsbacherplatz 2**
**W-8000 München 2(DE)**

(72) Erfinder: **Blaschke, Felix, Dr.**
**Steinforststrasse 19**
**W-8520 Erlangen(DE)**

**Beschreibung**

Die Erfindung betrifft ein Verfahren zur entkoppelten Regelung der Komponenten des Stromvektors am Ausgang eines Zwischenkreisumrichters gemäß dem Oberbegriff der Ansprüche 1, 2, 4 und 6. Die Erfindung betrifft ferner eine Schaltungsanordnung gemäß dem Oberbegriff der Ansprüche 9, 10, 19 und 20.

Umrichter dienen häufig dazu, eine Drehstrommaschine oder eine andere Wechsel- oder Drehstromlast zu speisen, wobei zur Steuerung oder Regelung der Last dem am lastseitigen Ausgang des Umrichters fließenden Strom eine bestimmte Amplitude und Frequenz eingeprägt wird. Durch die Aussteuerung des eingangsseitigen, an einem Versorgungsnetz angeschlossenen ersten Stromrichters wird einem Gleichstrom-Zwischenkreis ein Gleichstrom i eingeprägt, der die Amplitude des Ausgangsstroms bestimmt. Durch eine geeignete Steuerung eines zwischen dem Gleichstrom-Zwischenkreis und der Last angeordneten, zweiten Stromrichters können Phase und Amplitude des Ausgangsstromes den Bedürfnissen der Last angepaßt werden. Ordnet man z.B. den Drehstromanschlüssen des Ständers einer Drehfeldmaschine in einem orthogonalen, ruhenden Koordinatensystem drei gegeneinander um 120° gedrehte Wicklungsachsen zu, so können die in den Einzelwicklungen fließenden Ströme als Projektionen eines in diesem ruhenden Koordinatensystem gegebenen Stromvektors auf die drei Wicklungsachsen beschrieben werden.

Diese vektorielle Betrachtung des Stromes ist vor allem in den Fällen angebracht, in denen die Steuerung der Last erfordert, daß eine bestimmte Phasenverschiebung zwischen dem ausgangsseitigen Laststrom und einer Bezugsgröße der Last eingehalten wird. Eine derartige Bezugsgröße ist z.B. bei Drehfeldmaschinen der Flußvektor, wobei die zum Flußvektor parallele Komponente des Stromvektors als "Magnetisierungsstrom" das Feld der Maschine bestimmt, während die zum Flußvektor senkrechte Komponente als "Wirkstrom" das Drehmoment der Maschine bestimmt.

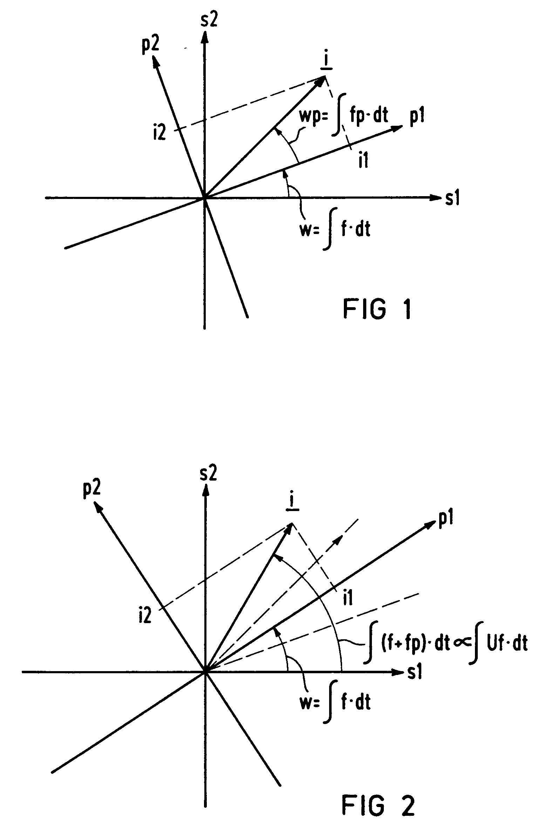

In Fig. 1 sind mit s1 und s2 die Achsen des ruhenden ("ständerorientierten") Koordinantensystems bezeichnet, während p1 die Richtung des Flußvektors angibt und p2 eine dazu senkrechte Achse. Dieses "feldorientierte" Koordinatensystem p1, p2 rotiert also gegenüber s1, s2 mit der Feldfrequenz f, wobei $w = \int f.dt$ den momentanen Feldwinkel angibt. Für den Leerlauf ist ein Magnetisierungsstrom i1 erforderlich, der proportional dem Fluß ist und die zum Flußvektor parallele Komponente des Ständerstromvektors i darstellt. Um bei Belastung eine bestimmte Drehzahl aufrechtzuerhalten, wird ein zusätzlicher, um 90° phasenverschobener Wirkstrom i2 benötigt, der somit als feldsenkrechte Komponente zur endgültigen Bestimmung des Stromvektors i benötigt wird. Infolge der Rotation der Drehfeldmaschine ergibt sich dann zu einem späteren Zeitpunkt für den Fall, daß Fluß und Drehmoment konstant gehalten werden, die in Fig. 2 gezeigte Darstellung. In diesem Fall ist also für den Stromvektor i dessen Amplitude i konstant zu halten (dies geschieht durch eine entsprechende Steuerspannung U des netzgetakteten ersten Umrichters), während die Richtung des Stromvektors und somit Phase und Frequenz des Ausgangsstromes durch den "Stromwinkel" wp = arc tan (i2/i1) und den Feldwinkel w gegeben ist und durch die Steuerspannung Uf für die Frequenz des ausgangsseitigen Stromrichters gesteuert wird.

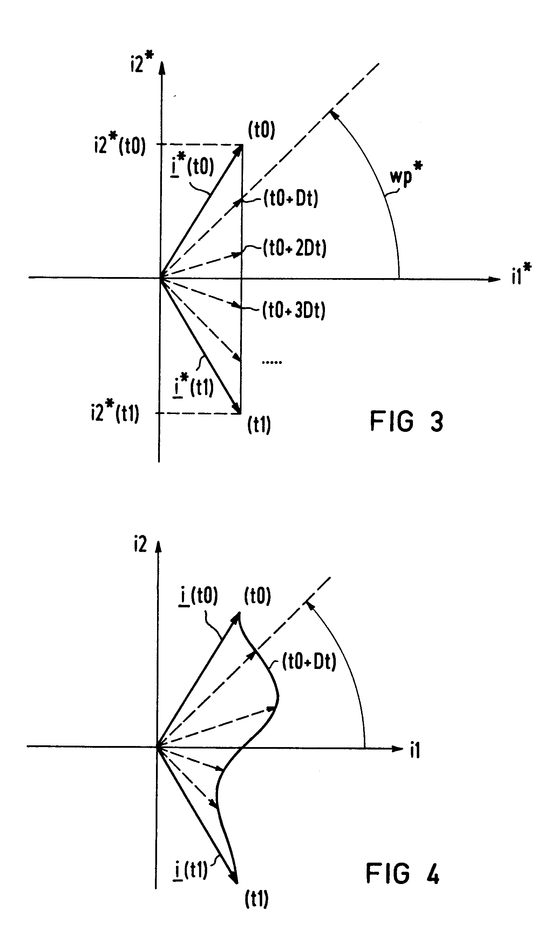

Figur 3 beschäftigt sich mit dem Fall, daß in einem Zeitintervall zwischen t0 und t1 der Fluß konstant gehalten werden soll, was dem Komponentensollwert i1* = const für den Magnetisierungsstrom entspricht. Gleichzeitig soll aber das Drehmoment herabgesetzt werden, z.B. um die Drehzahl der Maschine zu vermindern. Dies entspricht einem Komponentensollwert i2* für den Wirkstrom, der von einem positiven Wert i2*(t0) auf einen negativen Wert i2*(t1) reduziert werden soll. Diese entkoppelte Steuerung der beiden Stromkomponenten bedeutet für den Umrichter, daß aus den beiden Komponentensollwerten ein Betragssollwert $i^* = \sqrt{i1^{*2} + i2^{*2}}$ und ein ("feldorientierter", d.h. auf die Bezugs-Koordinaten p1, p2 bezogener) Winkelsollwert wp* = arc tan (i2*/i*) eingehalten werden muß, wobei diese polaren Sollwerte, die durch einen kartesisch/polaren Koordinatenwandler ermittelt werden können, in die entsprechenden, auf s1, s2 orientierten Sollwerte i* und (wp* + w) = $\int (f + fp^*)$ . dt transformiert werden müssen, um die entsprechenden Steuerspannungen für die beiden Stromrichter zu erhalten.

Die dadurch gebildeten Sollwerte für Betrag und Winkel alleine sind jedoch zur Bildung der Steuerspannungen der beiden Stromrichter noch nicht ausreichend. Die Induktivität des Zwischenkreises, der in der Regel eine eigene Zwischenkreis-Drossel enthält, setzt nämlich der raschen Änderung des Gleichstromes zunächst einen induktiven Widerstand entgegen, so daß die Stromamplitude nicht schnell auf der Gerade zwischen den beiden Vektoren i*(t0) und i*(t1) der Fig. 3 entlanggefahren werden kann. Bezeichnet man mit Uαv-UD den Spannungsabfall des Zwischenkreises zwischen der vom ersten Stromrichter eingeprägten Spannung U v und der Eingangsspannung UD des zweiten Stromrichters und mit LD und RD die Induktivität und den Widerstand des Zwischenkreises, so gilt

$$U\alpha v = UD + LD . d(i)/dt + RD . i.$$

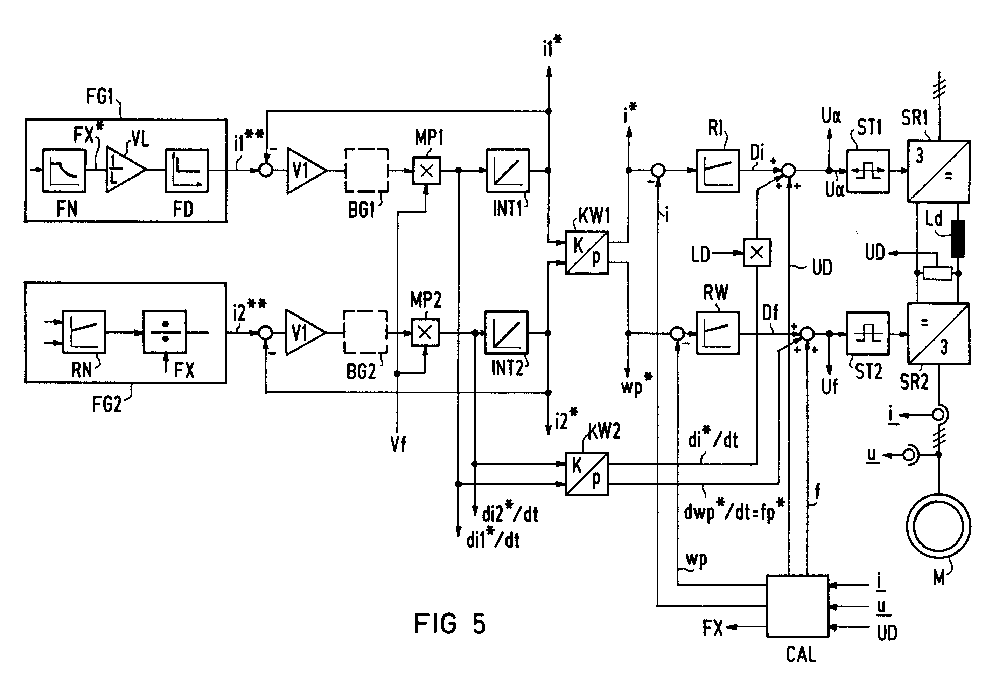

Die Realisierung dieser Zusammenhänge führt zu einer Schaltungsanordnung, wie sie auch der DE-A-34 27 841 bzw. EP-A-171 617 zugrunde liegt und deren Anwendung auf eine feldorientiert zu betreibende Drehfeldmaschine in Fig. 5 dargestellt ist. Der eingangsseitige Stromrichter SR1, der von der Steuerspannung $U\alpha$ über den netzgetakteten Steuersatz ST1 angesteuert wird, speist in einen Gleichstrom-Zwischenkreis mit der Zwischenkreisdrossel Ld. Dieser ist über den ausgangsseitigen Stromrichter SR2, der von der Steuerspannung Uf und den Steuersatz ST2 angesteuert wird, mit der Ständerwicklung einer Drehfeldmaschine (z.B. Asynchronmaschine M) verbunden. Die Steuerspannung $U\alpha$ wird gemäß der Beziehung

$$U\alpha = UD + LD . d(i^*)/dt + RD . Di$$

gebildet, wobei Di das Ausgangssignal eines Stromreglers RI ist, dem die Differenz zwischen dem Betragssollwert $i^*$ und dem Betrag i eines den Ausgangsstrom beschreibenden Ist-Stromvektors i zugeführt ist. Dieser Ist-Stromvektor wird in einem Steuergrößen-Rechner CAL aus Ständerstrom und Ständerspannung, ggf. auch der Zwischenkreisspannung UD und/oder der Drehzahl der Maschine (allgemeiner: aus Betriebsdaten des Umrichters und/oder der daran angeschlossenen Last) berechnet. Die Aufschaltung von UD und LD . di*/dt auf das Ausgangssignal di des Betragreglers RI bewirkt, daß der Istbetrag i dem Betragssollwert $i^*$ praktisch verzögerungsfrei folgt und der Regler nur geringfügige Abweichungen $i^* - i$ auszuregeln hat. Falls der Steuersatz ST1 direkt vom Stromregler angesteuert wird (d.h. $U\alpha = DI$) ist der Betragsregler wesentlich stärker belastet, um die entsprechenden, zu $i^* = i$ gehörenden Bewegungen der Steuerspannung $U\alpha$ zu erzeugen.

Da für die Regelung der Maschine die Komponenten i1 und i2 des Ist-Vektors im feldorientierten Koordinatensystem auf die entsprechenden Komponentensollwerte i1*, i2* eingeregelt werden sollen, ist der Betragssollwert $i^*$ an einem kartesisch/polaren Koordinatenwandler KW1 abgegriffen, der von den Komponentensollwerten i1* und i2* gespeist ist. Die Ableitung di*/dt des Betragssollwertes $i^*$ kann, ebenso wie die Ableitung d(wp*)/dt des Winkelsollwertes über einen Koordinatenwandler KW2 mit Differenziereinrichtung abgegriffen werden.

Nach den Figuren 1 und 2 ist eine Transformation vom feldorientierten p1-, p2-Koordinatensystem ins ruhende s1-, s2-Koordinatensystem erforderlich, wobei im vorliegenden Fall bereits der Steuergrößenrechner CAL für den Ist-Stromvektor den Ist-Stromwinkel wp im feldorientierten Koordinatensystem liefert. Falls das Ausgangssignal Df eines Winkelreglers RW, der vom Winkelsollwert wp* und dem Ist-Stromwinkel wp gespeist ist, direkt als Steuergröße Uf geliefert wird, vollzieht der Winkelregler RW die erforderliche Koordinatentransformation ins s1, s2-Bezugssystem und Df folgt im ausgeregelten Zustand jeder Bewegung des Feldwinkels $w = \int fdt$ gemäß $Uf = f + fp$. Der Winkelregler RW ist ebenfalls wesentlich entlastet, wenn die vom Steuergrößenrechner CAL als Bezugsfrequenz errechnete Feldfrequenz f sowie der am differenzierenden Koordinatenwandler KW2 abgegriffene Wert $fp^* = d(wp^*)/dt$ zum Regler-Ausgangssignal Df addiert wird.

Sofern durch den Umrichter keinerlei Beschränkungen für die Strombetragsregelung und die Frequenzregelung bestehen, kann mit dieser Anordnung erreicht werden, daß die feldorientierten Komponenten-Istwerte des Stromvektors nicht den in Fig. 4 gezeigten Verlauf annehmen, sondern praktisch den in Fig. 3 gezeigten Sollwerten folgen.

Tatsächlich ist jedoch die Kommutierungsfähigkeit des Stromrichters SR2 für die Frequenzeinprägung nur dann sichergestellt, wenn zwischen zwei Kommutierungen der zu kommutierende Eingangs-Gleichstrom nicht unzulässig anwächst. Dies erfordert, daß die Anstiegsgeschwindigkeit des Betragssollwertes beschränkt wird. Daher sieht diese Vorveröffentlichung einen ersten Hochlaufgeber vor, dem eingangsseitig eine z.B. an einem Drehzahlregler RN abgegriffene Führungsgröße für den Wirkstrom i2 zugeführt ist. In Fig. 5 ist bei dem entsprechenden Führungsgrößengeber FG2 vorgesehen, den vom Drehzahlregler RN gelieferten Drehmoment-Sollwert durch den im Steuergrößen-Rechner CAL errechneten Flußbetrag FX zu dividieren. Der Hochlaufgeber verändert nun bei Vorgabe einer veränderten Führungsgröße i2** den Komponentensollwert i2* solange, bis i2* = i2** erreicht ist.

Der Komponentensollwert i2* ist in diesem ersten Führungsgrößengeber an einem ersten Integrator abgegriffen, dessen Eingangssignal somit die Änderungsgeschwindigkeit di2*/dt des Komponentensollwertes ist. Bei konstant gehaltenem Magnetisierungsstrom i1 kann somit durch Begrenzung des Integrator-Eingangs nicht nur die Änderungsgeschwindigkeit des Komponentensollwerts i2*, sondern auch die Änderungsgeschwindigkeit des Betragssollwertes $i^*$ begrenzt werden. Die Begrenzung des Integrator-Eingangssignals di2*/dt geschieht auf herkömmliche Weise dadurch, daß die Differenz i2** - i2* über einen Verstärker mit hohem Verstärkungsfaktor V1 dem Integrator INT2 zugeführt wird. Bei Änderung von i2** wird dieser Verstärker daher zunächst übersteuert und liefert somit ein konstantes Ausgangssignal als Integrand des Integrators INT2.

Die erwähnte DE-A-34 27 841 sieht nun vor, durch Multiplikation der Umrichterfrequenz f (bzw. dessen Steuersignals Uf) mit dem Strombetrag i (bzw. dem Betragsollwert i*) einen Sollwert vorzugeben, der einem Begrenzungsregler zugeführt ist. Als Istwert dient die Änderungsgeschwindigkeit des Betragsollwertes und das Ausgangssignal des Begrenzungsreglers ist einem entsprechenden Multiplizierer MP2 am Eingang des Integrators INT2 zugeführt. Überschreitet daher die Änderungsgeschwindigkeit des Betragsollwertes den Sollwert, so reduziert der Betragsregler den Multiplikationsfaktor des Multiplizierers MP2 und setzt somit die Hochlaufgeschwindigkeit des Integrators INT2 herab.

Falls auch für den Komponentensollwert i1* plötzliche Änderungen seiner Führungsgröße i1**, die an einem Führungsgrößengeber FG1 abgegriffen werden kann, zugelassen werden, so ist auch für den Komponentensollwert i1* ein entsprechender Hochlaufgeber mit einem Integrator INT1 und einem ebenfalls vom Begrenzungsregler angesteuerten Multiplizierer MP1 vorgesehen.

Gegenüber dieser im wesentlichen bekannten Anordnung sieht die Erfindung eine andere Bildung des Multiplikationsfaktors Vf für die Multiplikatoren MP1 und MP2 sowie zusätzliche Begrenzungselemente BG1 und BG2 vor.

Diese frequenzabhängige Stromanstiegsbegrenzung stellt zwar die Kommutierungsfähigkeit sicher, verlängert aber die Anregel- und Einstellzeiten, die jeweils zum Erreichen eines neuen, durch die Führungsgrößen i1**, i2** gegebenen Zustand benötigt werden. In manchen Fällen soll ein derartiger neuer Zustand aber in möglichst kurzen Zeiten erreicht werden und gleichzeitig soll eine störende Verkopplung von Magnetisierungsstrom und Wirkstrom, wie sie in Fig. 4 vorliegt, vermieden werden.

Die kürzesten Einstellzeiten werden naturgemäß bei der größtmöglichen Anstiegsgeschwindigkeit der feldorientierten Koordinatensollwerte erreicht. Bei dieser maximalen Anstiegsgeschwindigkeit dürfen aber bestimmte Regelgrößen und Stellgrößen nicht überschritten werden. Da der Zusammenhang zwischen den Regelgrößen und Stellgrößen einerseits und der Anstiegsgeschwindigkeit andererseits aber von den jeweiligen Betriebsparametern des Umrichters und der Last abhängt, würde eine Regelung, bei der die Grenzwerte für die Anstiegsgeschwindigkeit für die Komponentensollwerte aus dem ungünstigsten Betriebsfall abgeleitet sind, die Möglichkeiten des Umrichters bei anderen Betriebsparametern nicht voll ausnützen.

Damit stellt sich die grundlegende Aufgabe, eine entkoppelte Regelung der Stromkomponenten anzugeben, bei der der Grenzwert der Anstiegsgeschwindigkeit auf möglichst optimale Weise an die jeweiligen Betriebsdaten des Umrichters angepaßt ist.

Welche der Betriebsgrößen zur Bestimmung der Anstiegsgeschwindigkeiten heranzuziehen ist, ergibt sich dabei daraus, welches Element des Umrichters die schwächste Stelle darstellt und die stärkste Einschränkung erfordert.

Z.B. läßt der lastseitige Stromrichter keine beliebig hohen Frequenzen zu. Selbst wenn daher die Bezugsfrequenz f (im Fall der Drehfeldmaschine also die Umlauffrequenz des Flußvektors) an sich weit unterhalb der zulässigen Maximalfrequenz fmax liegt, kann bei raschen Änderungen des Drehmoments gemäß Fig. 3 ein Wert $fp^* = d(wp^*)/dt$ auftreten, der bei der Schaltung nach Fig. 5 zu einer Steuerspannung Uf führt, die über dem zu fmax gehörenden Wert Ufmax liegt. Dann ist der Betriebsbereich für die Steuerung der Frequenz, für die der Stromrichter SR2 und sein Steuersatz ST2 als Stellglied dienen, überschritten, so daß dieses Stellglied nur die maximale Frequenz liefert und damit der Winkel-Regelkreis unterbrochen ist. Damit weichen die Istwerte i1, i2 zumindest vorübergehend von den Sollwerten ab und Fluß und Drehmoment verändern sich ungeregelt.

Das gleiche tritt auf, wenn die Steuerspannung $U\alpha$ des netzseitigen Stromrichters den zu einer maximalen Aussteuerung gehörenden Wert, z.B. der Steuerspannung $U\alpha$ max für den maximalen Steuerwinkel $\alpha \approx 0°$, überschreitet.

Bei einer raschen Entlastung der Drehfeldmaschine können auch generatorische Betriebszustände auftreten, bei denen der netzseitige Stromrichter als Wechselrichter ins Netz zurückspeist. Für diesen Fall darf die Steuerspannung $U\alpha$ den zur Wechselrichtertrittgrenze (d.h. zum minimalen Wechselrichter-Aussteuerungswinkel) gehörenden Minimalwert $U\alpha$min des Wechselrichtersteuerwinkels nicht unterschreiten.

Außerdem darf auch der Wechsel von Gleichrichteraussteuerung zu Wechselrichteraussteuerung nicht beliebig schnell vorgenommen werden, da die Ventile des netzgeführten Stromrichters SR1 in der Regel nicht zwangslöschbar sind und somit Strom führen, bis die Ventilspannungen den natürlichen Spannungsnullpunkt überschreiten und daher nach dem natürlichen Erlöschen der Ventile eine der Wechselrichteraussteuerung entsprechende erneute Zündung erfolgen kann.

Für die Ventile eines Stromrichters mit Phasenfolgelöschung oder anderer Stromrichter, deren Ventile durch die an Kommutierungskondensatoren anliegende Spannung gelöscht werden, muß die Zündung der Ventile erfolgen, bevor der Zwischenkreisstrom den durch die jeweilige Spannung der Kommutierungskondensatoren noch löschbaren Spannungswert erreicht. Auch dies bedeutet eine Beschränkung der Anstiegsgeschwindigkeit des Betragssollwertes und somit eine Beschränkung der Anstiegsgeschwindigkeit der Komponentensollwerte.

Durch Wahl eines entsprechenden Verstärkungsfaktors V1 für den Normalbereich wird also eine möglichst hohe Anstiegsgeschwindigkeit vorgegeben. Ist dabei zu befürchten, daß als erstes der zweite Stromrichter wegen seines beschränkten Frequenzbereiches an die Grenzen seiner Aussteuerung gerät, so wird die Aussteuerungsfähigkeit dieses zweiten Stromrichters durch ein Verfahren mit den Merkmalen des Anspruchs 1 und eine Schaltungsanordnung mit den Merkmalen des Anspruchs 9 sichergestellt.

Stellt dagegen die beschränkte Aussteuerungsfähigkeit des ersten Stromrichters die größte Beschränkung dar, so wird dessen Aussteuerbarkeit durch ein Verfahren mit den Merkmalen des Anspruchs 2 und eine Schaltungsanordnung mit den Merkmalen des Anspruchs 10 sichergestellt.

Sieht man von diesen Begrenzungen ab, so liegt die maximale, durch den Verstärkungsfaktor V1 gegebene Anstiegsgeschwindigkeit vor, solange dieser Verstärker übersteuert ist. Nähert sich dagegen i2* dem Wert i2**, so vermindert sich die Anstiegsgeschwindigkeit, bis beide Werte nach einer kostanten Einlaufzeit einander gleich geworden sind. Diese Einlaufzeit kann unter Erhöhung der Änderungsgeschwindigkeit verkürzt werden durch ein Verfahren mit den Merkmalen des Anspruchs 4 und eine Schaltungsanordnung mit den Merkmalen des Anspruchs 20.

Die Kommutierungsfähigkeit des zweiten Stromrichters kann dabei durch ein Verfahren mit den Merkmalen des Anspruchs 6 und eine Schaltungsanordnung mit den Merkmalen des Anspruchs 19 sichergestellt werden.

Vorteilhafte Weiterbildungen der Erfindung sind in den Unteransprüchen gekennzeichnet und werden anhand eines Ausführungsbeispieles und von 18 Figuren näher erläutert.

Es zeigen:

die Figuren 1 und 2 die bereits erläuterte Darstellung des Stromvektors in verschiedenen Koordinatensystemen,

die Figuren 3 und 4 die bereits erläuterte Ortskurve des durch die Sollwerte und die Istwerte dargestellten Stromvektors nach dem Stand der Technik,

die Figur 5 die bereits erläuterte Grundschaltung mit einer umrichtergespeisten Drehfeldmaschine,

die Figur 6 eine Regelanordnung zur Herabsetzung der Anstiegsgeschwindigkeit in Abhängigkeit von den Aussteuerungsgrenzen der beiden Stromrichter,

die Figur 7 einen herkömmlichen Hochlaufgeber und dessen Anstiegsgeschwindigkeit beim Einlaufen in den Endwert,

die Figur 8 einen Hochlaufgeber mit verkürzten Einlaufzeiten,

die Figuren 9 bis 12 Signalverläufe zur Erläuterung der Figuren 7 und 8,

Figur 13 ein Beispiel für den zweiten Stromrichter,

Figur 14 den Verlauf der Spannung an den Kommutierungskondensatoren der Fig. 13,

Figur 15 eine Anordnung zur Bestimmung der wirksamen Kommutierungskondensator-Spannung aus Spannungsmeßwerten,

Figur 16 eine entsprechende Schaltung zur Berechnung der wirksamen Kommutierungskondensator-Spannung aus Betriebsdaten der Last,

Figur 17 ein Begrenzungselement zur Einhaltung der Kommutierungsbedingungen des Umrichters und zur Verkürzung der Einlaufzeiten des Hochlaufgebers,

Figur 18 ein entsprechendes Begrenzungselement für die Änderungsgeschwindigkeit des zweiten Komponentensollwertes.

In der Regel wird über den Magnetisierungsstrom-Sollwert i1* der Fluß der Drehfeldmaschine im normalen Drehzahlbereich auf einem konstanten Sollwert FX* gehalten und lediglich bei Überschreitung eines Drehzahl-Grenzwertes von einem Kennlinienglied FN in Abhängigkeit von der Drehzahl kontinuierlich herabgesteuert. Der Komponentensollwert i1* ist dann nur schwach zeitveränderlich und die beiden Stromrichter des Umrichters erreichen nur bei Änderungen des Wirkstrom-Sollwertes i2* die Grenzen ihrer Steuerfähigkeit. Daher sind entsprechende Schutzmaßnahmen vor allem für die Änderungsgeschwindigkeit des Komponentensollwertes i2* erforderlich und werden zunächst für diese Komponente beschrieben.

Solange die Steuerspannung Uf für die Frequenz des zweiten Stromrichters von dem zur zulässigen Maximalfrequenz fmax gehörenden Höchstwert Ufmax weit entfernt ist, läßt dieser zweite Umrichter eine hohe Änderungsgeschwindigkeit des Winkelsollwerts zu, die einer hohen Änderungsgeschwindigkeit des Komponentensollwerts i2* entspricht. Nähert sich jedoch die Differenz Ufmax - Uf dem Grenzwert Null, so muß über eine Verminderung der Änderungsgeschwindigkeit des Komponentensollwerts i2* das Steuersignal Uf für die Umrichterfrequenz herabgesetzt werden.

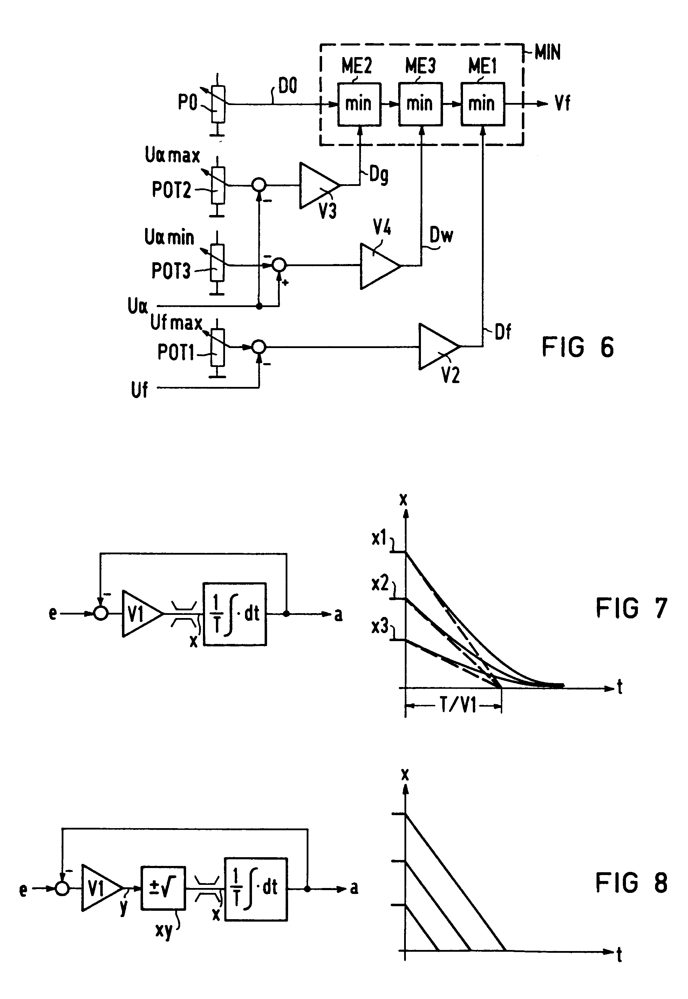

Dies geschieht durch einen Eingriff auf entsprechende Mittel am Eingang des Hochlaufintegrators INT2, wobei zunächst gemäß Fig. 6 die Steuerspannung Uf des zweiten Stromrichters von dem an einem Potientiometer POT1 abgegriffenen Höchstwert Ufmax subtrahiert wird. Ein als Proportionalregler wirkender Regelverstärker V2 schaltet das Differenzsignal Df einer Minimalwert-Auswahlschaltung ME1 auf. Droht keine Überschreitung der zulässigen Maximalfrequenz fmax, so wird ein Wert DO für die Änderungsgeschwindigkeit, der an einem Potentiometer PO abgegriffen wird, über die Auswahlschaltung ME1 als entsprechender Proportionalitätsfaktor Vf dem Multiplizierer MP2 im Hochlaufgeber der Fig. 5 aufgeschaltet. Mit Annäherung an die zulässige Maximalfrequenz verringert sich das Differenzsignal Df und der Multiplizierer MP2 setzt die Änderungsgeschwindigkeit des Komponentensollwerts i2* entsprechend herab. Der Koordinatenwandler KW1 verringert dann gleichzeitig die Änderungen des Betragssollwertes i* und des Winkelsollwertes wp* und der differenzierende Koordinatenwandler KW2 setzt ohne Zeitverzögerung die Steuersignale Uf und Uα beider Stromrichter herab, so daß der Ist-Stromvektor, der in Fig. 3 durch die Sollwerte vorgegebenen Ortskurve folgen kann.

Maximaler Zwischenkreis-Gleichstrom und maximale Stromamplitude i liegt vor, wenn der erste Stromrichter mit einem maximalen Aussteuerungsgrad, d.h. einem Gleichrichter-Steuerwinkel α nahe dem Wert Null und einer maximalen Steuerspannung Uα angesteuert wird. Eine weitere Erhöhung von Uα würde zu keiner weiteren Erhöhung des Stromes führen. Auch für diesen Fall ist vorgesehen, über den Proportionalitätsfaktor Vf einen Eingriff am Hochlaufgeber vorzunehmen, der die Änderungsgeschwindigkeit des Komponentensollwertes i2* in Abhängigkeit von der Differenz Uαmax - Uα herabsetzt. Entsprechend der Frequenz-Begrenzungsregelung ist in Fig. 6 ein Potentiometer POT2 zur Einstellung von Uαmax und ein Verstärker V3 für die Differenz Uαmax - Uα vorgesehen und eine Minimalwert-Auswahlschaltung ME2 bildet den Minimalwert von dem eingestellten Normalwert DO des Verstärkungsfaktors VF und dem Differenzsignal Dg.

Dadurch ist sichergestellt, daß im Gleichrichterbetrieb die Gleichrichteraussteuerung des ersten Stromrichters sich umso langsamer (im Grenzfall mit der Änderungsgeschwindigkeit Null) ihrem Maximalwert nähert, je weiter der erste Stromrichter bereits aufgesteuert ist, und daß der maximale Aussteuerungsgrad, bei dem der erste Stromrichter seine Steuerungsfähigkeit verliert und die Entkopplung der Komponentensollwerte i1* und i2* gestört würde, nicht erreicht wird.

Der Verlust der Steuerungsfähigkeit droht dem ersten Stromrichter aber auch dann, wenn z.B. bei einer Entlastung der Drehfeldmaschine eine Rückspeisung ins Versorgungsnetz durch einen Wechselrichterbetrieb des ersten Stromrichters erforderlich ist. Für diesen Fall sieht Fig. 6 vor, mittels eines Potentiometers POT3 einen Grenzwert Uαmin einzustellen, der der zulässigen maximalen Wechselrichteraussteuerung, d.h. dem zu einem Steuerwinkel α nahe der Wechselrichtertrittgrenze (z.B. α = 150°) gehört. Mittels eines Verstärkers V4 wird das entsprechende Differenzsignal Dw = Uα - Uαmin gebildet und einer Minimalwert-Auswahlschaltung ME3 zugeführt.

Die drei hintereinander geschalteten Auswahlschaltungen ME1, ME2 und ME3 bilden somit eine Auswahlschaltung MIN, die im normalen Betriebsbereich für Vf den Wert Do auswählt und nur bei Annäherung an die Grenzwerte der Steuerungsfähigkeit des Umrichters den Proportionalitätsfaktor Vf entsprechendem dem Differenzsignal auswählt, das durch besonders kleine Werte die kritischste Annäherung an die Aussteuergrenzen des Umrichters angibt.

In der Regel enthalten die Steuersätze ST1 und ST2 eigene Begrenzungen, um Übersteuerungen zu vermeiden. Gemäß der Erfindung ist aber bereits bei der Bildung der Steuersignale eine gemeinsame Begrenzung für beide Steuersignale vorgesehen und in den Steuersätzen ist eine derartige Begrenzung entweder unwirksam gemacht und so hoch eingestellt, daß sie erst jenseits der nach Fig. 6 eingestellten Grenzwerte eingreifen würde.

Der richtige Zeitverlauf des Steuersignals Uα ist beim Herabsteuern eines netzgeführten Stromrichters dann gegeben, wenn bei einer Änderung des Steuerwinkels die Zündung der nächsten Ventile erst erfolgt, nachdem die zuletzt gezündeten und bis dahin stromführenden Ventile durch die Phasenlage der angelegten Netzspannung ihre Sperrfähigkeit erlangt haben. Dies entspricht in der Regel der Forderung, den Steuerwinkel des ersten Stromrichters in einer Millisekunde um nicht mehr als näherungsweise 15° herabzusetzen. Für eine Umsteuerung von z.B. α = 30° auf α = 150° entspricht dies etwa einer Zeit von 8 msek.

Die Steuerspannung Uα des ersten Stromrichters wird aber, wie aus Fig. 5 hervorgeht, wesentlich durch die Größe di*/dt bestimmt. Auch die vom Integranden des Hochlaufintegrators INT2 vorgegebene Hochlaufgeschwindigkeit darf somit einen vorgegebenen negativen Grenzwert nicht erreichen. Negative Integranden eines Hochlaufintegrators treten vor allem auf, wenn der am Integrator-Ausgang abgegriffene Wert a (im Fall des Hochlaufintegrators INT, also a = i2*) sich seiner Führungsgröße e(hier: i2**) soweit nähert, daß der Verstärker am Eingang des Hochlaufintegrators nicht mehr übersteuert ist und entsprechend seinem Verstärkungsfaktor V1 den Integranden x = V1 (a - e) liefert, wie dies in Fig. 7 für den Fall eines herkömmlichen Hochlaufgebers dargestellt ist. Erlangt zum Zeitpunkt t = 0 der Verstärker V1 seine Steuerbarkeit wieder, so nimmt der Wert x exponentiell mit der Zeitkonstanten T/V1 ab, die bei verschiedenen Werten x1, x2 und x3 für t<0 konstant und nur durch den Verstärkungsfaktor V1 und die Zeitkonstante T des Integrators gegeben ist.

Um daher die Grenzbedingung für di*/dt nicht zu verletzen, muß die Änderungsgeschwindigkeit des Hochlaufgebers auf den maximal möglichen Wert von x und die Änderungsgeschwindigkeit zum Zeitpunkt t = 0 dimensioniert werden. Man erkennt aus Fig. 7, daß dadurch nicht nur für geringere Werte von x unnötig hohe Einlaufzeiten in Kauf genommen werden, sondern auch für Zeiten t>0 sehr bald Änderungsgeschwindigkeiten erreicht werden, die den kritischen Grenzwert nicht erreichen und dazu führen, daß der Endzustand mit a = e erst später erreicht wird, als dies an sich erforderlich wäre.

Man kann daher die zum Erreichen des neuen Endzustandes a = e nötigen Zeiten verkürzen, wenn bei Annäherung des Ausgangswertes a des Hochlaufgebers an die Führungsgröße e die Änderungsgeschwindigkeit x so vorgegeben wird, daß die zeitliche Ableitung der Änderungsgeschwindigkeit ungefähr konstant ist. Gemäß Fig. 8 geschieht dies dadurch, daß die Änderungsgeschwindigkeit ungefähr nach einer Wurzelkennlinie aus der Differenz von e - a bestimmt wird.

Führt man nämlich für den Einlaufbereich die Zeitvariable $\tau$ = t0 - t ein, so bedeutet die Forderung nach Linearität des Integranden x die Beziehung

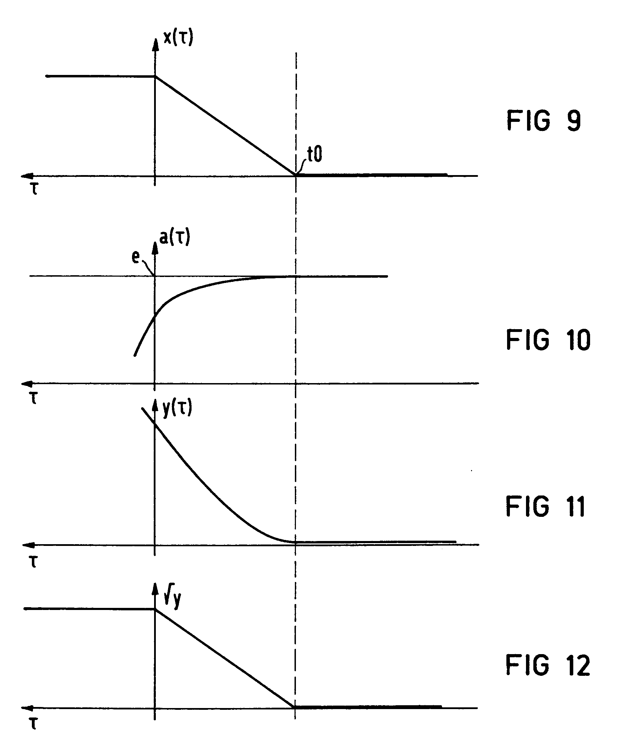

$$x (\tau) = k . \tau \text{ (Fig. 9).}$$

Für die Größe a = $\int$ x (t') dt folgt daraus

$$a(\tau) = -1/T \int x \, d\tau' + C = - k.\tau^2/2T + c \text{ (Fig. 10)}$$

mit der Integrationskonstante c = e. Für das Ausgangssignal y des Verstärkers gilt andererseits

$$y = V1 (e - a(\tau)) = (V1 . k/2T).\tau^2 \text{ (Fig. 11),}$$
$$\text{oder } \sqrt{y} = \sqrt{v1.k/2T} . \tau \text{ (Fig. 12).}$$

Für den Kennliniengeber XY der Fig. 8 liefert der Vergleich der Funktionen x ($\tau$) und y ($\tau$) somit tatsächlich die Wurzelkennlinie, wobei die Steigung k gegeben ist durch

$$k = \sqrt{V1.k/2T} = V1/2T.$$

Die Steigung k ist also tatsächlich amplitudenunabhängig und zeitunabhängig und kann bei gegebener Zeitkonstanten T des Hochlaufgebers durch geeignete Wahl des Verstärkungsfaktors V1 den Bedürfnissen angepaßt werden.

Für negative Werte e - a am Eingang des Verstärkers V1 ist x($\tau$) = -k .$\tau$ zu wählen, in diesem Fall ist die Wurzelkennlinie mittels eines Polaritätsdetektors mit sign(a - e) zu bewerten.

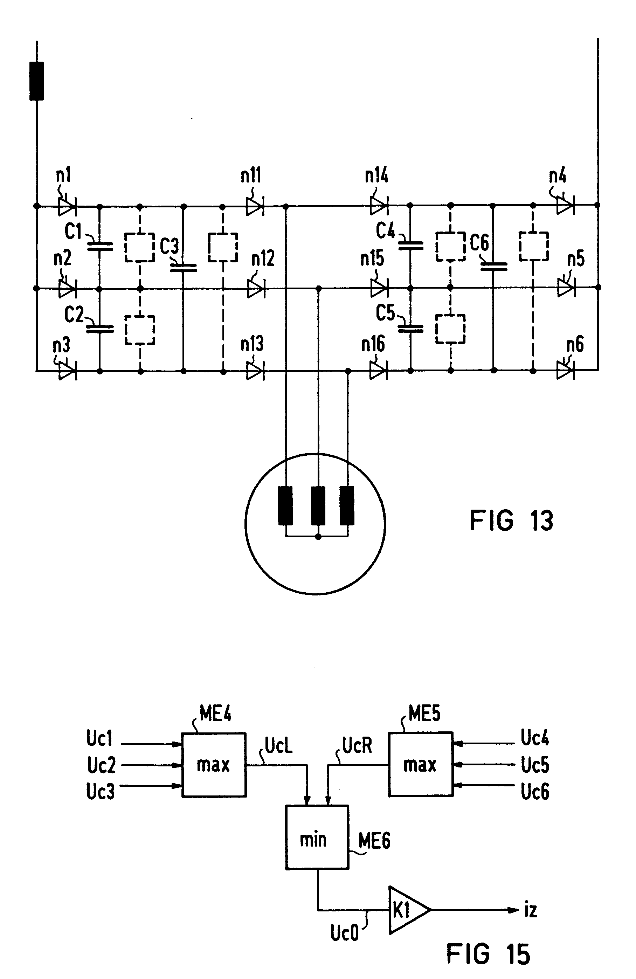

Figur 13 zeigt den zweiten Umrichter, der entsprechend einer bevorzugten Ausführungsform auf Phasenfolgelöschung ausgelegt ist. Sind bei einem derartigen Umrichter z.B. die Ventile n2, n12, n16 und n6 stromführend, so sind die mit dem stromführenden Thyristor n2 verbundenen Belegungen der Kondensatoren c1 und c2 positiv und die mit dem Thyristor n6 verbundenen Belegungen der Kondensatoren c5 und c6 negativ. In diesem Zustand kann in der linken Thyristorgruppe (d.h. n1, n2, n3) das Ventil n2 gelöscht werden, indem durch Zünden von n1 bzw. n3 die Spannung des Kondensators C1 bzw. C2 an den Thyristor n2 gelegt wird. Der Strom kommutiert dann auf das neugezündete Ventil unter Umladung der Kommutierungskondensatoren. Das gleiche gilt aber auch für die rechte Thyristorgruppe n4, n5, n6.

Die Reihenfolge der nacheinander zu zündenden Ventile ist also weitgehend frei und kann dazu ausgenutzt werden, den Ständerstromvektor einer Drehfeldwicklung in seiner Lage praktisch kontinuierlich zu verändern.

Stromführung der Ventile n2 und n6 bedeutet, daß der Strom über die Ständerwicklung S zugeführt und über die Ständerwicklung T abgeführt wird. Es liegt also eine von insgesamt 6 Möglichkeiten vor, den Strom durch die Maschine zu führen. Eine Kommutierung des Stromes von n2 auf n1, d.h. der Wicklung S auf die Wicklung R, bedeutet eine diskontinuierliche Drehung des Stromvektors um 60°. Wird jedoch in einem hohen Alternierungstakt zwischen den Ventilen n2 und n1 abgewechselt, so entstehen Strompulse in beiden Wicklungen. Dies entspricht einer Zwischenlage des gemittelten Stromvektors, die durch eine Veränderung des Einschaltdauer-Verhältnisses der beiden Ventile kontinuierlich geändert werden kann.

Der Einsatz dieser Puls-Methode erlaubt es also, den Winkel des Ständerstromvektors kontinuierlich auf den durch den Winkelsollwert angegebenen Wert einzustellen. Entscheidend ist hier allerdings, daß der Laststrom zum Zeitpunkt der nächsten Kommutierung noch keinen Wert angenommen hat, bei dem der Kommutierungskondensator bereits vollständig entladen ist und seine Kondensatorspannung die Polarität wechselt, bevor die Schonzeit abgelaufen ist, die zum Erreichen der vollständigen Sperrfähigkeit des zu löschenden Ventils benötigt wird.

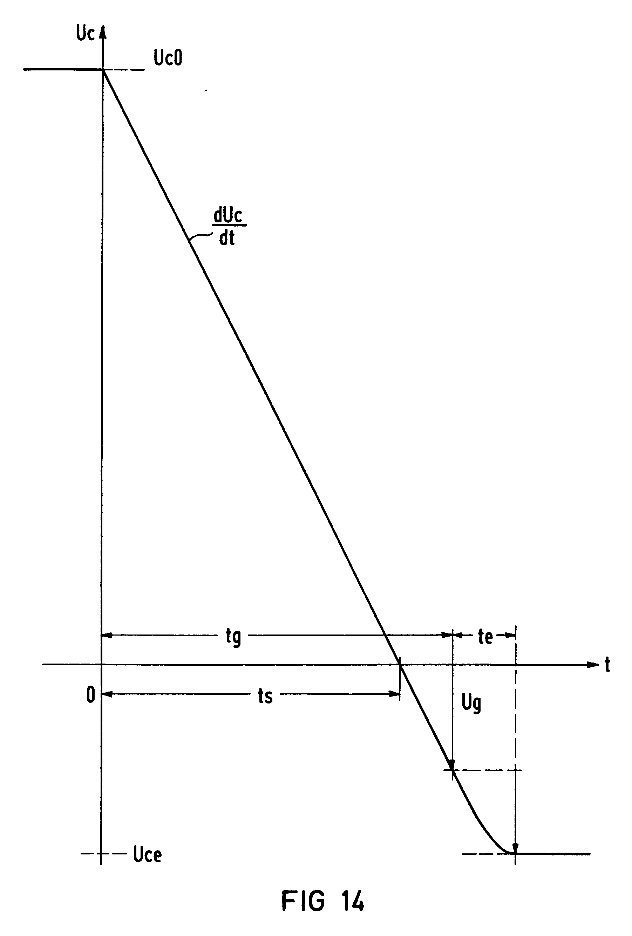

In Fig. 14 ist die Kondensatorspannung Uc gezeigt, die durch die Zündung des nächsten Ventils antiparallel an das zunächst stromführende Ventil gelegt wird und zu dessen Erlöschen führt. Da der Laststrom i bei Zünden dieses nächsten Ventils (Zeitpunkt t = 0) zunächst über den Kommutierungskondensator (Kapazität C) fließt und diesen umlädt, ist d(Uc)/dt proportional zu i/C. Andererseits gilt d(Uc)/dt = Uc0/ts, wobei Uc0 die Spannung am Kommutierungskondensator vor der Zündung und ts den Zeitpunkt des Nulldurchgangs dieser Spannung angibt, also den Zeitpunkt des Polaritätswechsels. Das er-löschende Ventil erreicht nur dann seine Sperrfähigkeit, wenn nach Zünden des nächsten Ventils die Gegenspannung Uc>0 wenigstens für die Dauer einer vorgegebenen Mindest-Schonzeit tsmin anliegt, d.h. es gilt

tsmin < ts proportional C . Uc0/i.

Dies führt zu einem zulässigen Maximalwert iz, der vom Betrag des Stromvektors bzw. dem Betragsollwert nicht überschritten werden darf, so daß sich die Bedingung ergibt

i*<iz = K1 . Uc0

mit dem vorrichtungsbedingten Parameter K1, der proportional der Kapazität C des Kommutierungskondensators und der vorgegebenen Mindest-Schonzeit tsmin der verwendeten Ventile ist.

Um diese Bedingung einzuhalten, wird die Änderungsgeschwindigkeit des Komponentensollwertes i2* auch in Abhängigkeit von der Differenz iz - i* herabgesetzt.

Es zeigt sich, daß bei der Kommutierung des Stromes innerhalb jeder Stromrichterhälfte der Kondensator als Kommutierungskondensator für das Erlöschen eines Ventils wirkt, der auf die größte Spannung aufgeladen ist. Diese "wirksame Kommutierungskondensator-Spannung" kann also für die der linken Umrichterhälfte zugeordneten Kondensatoren c1, c2 und c3 dadurch gebildet werden, daß entsprechende (in Fig. 13 mit unterbrochenen Linien dargestellte) Spannungsmeßglieder die entsprechenden Kondensatorspannungen Uc1, Uc2 und Uc3 liefern, aus denen eine Maximalwert-Auswahlschaltung ME4 den Maximalwert UcL bildet. Entsprechendes ist für die Kondensatoren C4, C5, C6 der rechten Hälfte und deren Spannungen Uc4, Uc5 und Uc6 vorgesehen, um mittels der Maximalwert-Auswahlschaltung ME5 die wirksame Spannung UcR der Kommutierungskondensatoren der rechten Hälfte zu bilden. Solange nun bekannt ist, in welcher Stromrichterhälfte die nächste Zündung stattfindet, kann für die Bildung von iz auch die wirksame Spannung dieser Hälfte herangezogen werden. Da jedoch bei dem beschriebenen Pulsverfahren erst ein entsprechendes, im Steuersatz ST2 vorhandenes Modulationsglied festlegt, in welcher Brückenhälfte welches Ventil als nächstes gezündet wird, sorgt eine Minimalwert-Auswahlschaltung ME6 dafür, daß für die Bildung des Strom-Höchstwertes iz jedenfalls keine zu hohe Kondensatorspannung zugrunde gelegt wird.

Die Messung der Kondensatorspannungen erfordert einen Eingriff in den Aufbau des zweiten Stromrichters. Es ist aber auch möglich, die wirksame Spannung der Kommutierungskondensatoren modellmäßig aus Betriebsdaten des Umrichters bzw. der Steuerung zu errechnen. Hierzu wird das Umschwingen der Spannung an den Kommutierungskondensatoren während des zuletzt erfolgten Kommutierungsvorgangs betrachtet. Der Maximalwert der Kommutierungsspannungen, die an den drei Kommutierungskondensatoren einer Gruppe als Endwerte Uce nach der letzten Kommutierung erreicht werden, ist dann gleichzeitig die für die nächste Kommutierung wirksame Kommutierungsspannung.

Während der Kommutierung wird, wie Fig. 14 zeigt, die Spannung Uc durch den konstanten Laststrom noch über die Zeit ts hinaus mit linearer Steigung abgebaut, bis beim Zeitpunkt tg die Spannung Uc die von der Last her wirkende Gegenspannung Ug erreicht. Für diese Gegenspannung gilt für im Fall einer Drehfeldmaschine (Feld FX, Feldfrequenz f)

Ug = FX . f . cos wp.

Zu den Zeiten t>tg nimmt der Kondensatorstrom allmählich ab und es ergibt sich ein sinusförmiger Verlauf der Spannung. Die Zeit te vom Zeitpunkt tg bis zu dem Zeitpunkt, an dem der Kondensatorstrom endgültig erlischt und die Spannung Uc ihren Endwert Uce annimmt, beträgt eine Viertel-Periode der Sinusschwingung. Da zum Zeitpunkt tg die Steigung dieser Sinusschwingung proportional zu i/C ist, ist auch die Sinus-Amplitude Uce - Ug proportional zu i.

Bezeichnet man die Proportionalitätskonstante mit K2 und errechnet für den Zeitpunkt tg die entsprechende Spannung Ug aus der erwähnten Beziehung aus dem Sollwert oder Istwert FX des Flusses, der Frequenz f und dem Cosinus des Istwertes wp oder Sollwertes wp*, so erhält man eine kontinuierliche Hilfsgröße Ucf mit

Ucf = FX . f . cos wp + k2 . i.

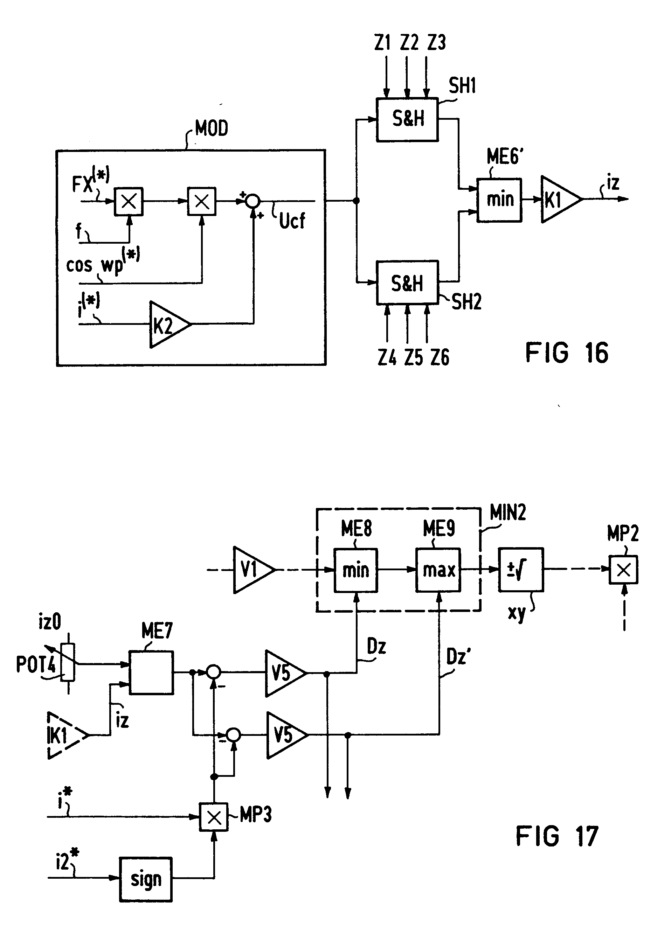

Eine entsprechende Modellschaltung MOD zur Berechnung von Ucf ist in Fig. 16 dargestellt.

Diese kontinuierliche Hilfsgröße Ucf kann nun mit den Zündimpulsen Z1, Z2 und Z3 der Ventile n1, n2, n3 jeweils in einer sample-and-hold-Schaltung SH1 abgetastet und gespeichert werden. Mittels der Zündimpulse Z4, Z5 und Z6 für die Ventile der rechten Gruppe kann die Funktion Ucf auch in einer sample-and-hold-Schaltung SH2 abgetastet werden, um einen Modell-Wert für die Spannung UcR der Fig. 15 zu liefern. Eine MinimalwertAuswertschaltung ME6' bildet dann den Modellwert für die wirksame Kommutierungskondensatorspannung, aus der mittels eines Verstärkers mit dem Verstärkungsfaktor K1 nunmehr ebenfalls der Grenzwert iz ermittelt werden kann.

Fig. 17 zeigt die weitere Verarbeitung dieses Grenzwertes iz. Eine Minimalwert-Auswahlschaltung ME7 gibt einen an einem Potentiometer POT4 abgegriffenen Wert iz0 oder, für iz<iz0, den Wert iz als Sollwert auf einen Proportionalregler mit dem Verstärkungsfaktor V5, dem als Istwert der - vorteilhaft an einem Multiplizierer MP3 mit sign (i2*) bewertete - Istbetrag bzw. besonders vorteilhaft der Betrags-Sollwert i* zugeführt ist. Die Anstiegsgeschwindigkeit des Komponentensollwerts i2* wird dann in Abhängigkeit von der Differenz iz - i* herabgesetzt. Dies geschieht bei der Begrenzerschaltung nach Fig.17, die dem Element BG2 der Fig. 5 entspricht, indem das Differenzsignal Ez einer Minimalwert-Auswahlschaltung ME8 zugeführt ist, deren anderer Eingang am Verstärker V1 abgegriffen ist.

Zu beachten ist, daß nicht nur bei einer Zunahme des Drehmoments, die durch einen zu positiven Werten ansteigenden Komponentensollwert i2* hervorgerufen wird, sondern auch durch eine Entlastung, die negativen Werten von i2* entspricht, der Betragssollwert i* unzulässig schnell anwachsen kann. Um auch in diesem Fall, in dem der Verstärker V1 negative Werte liefert und daher die Minimalwert-Auswahlschaltung ME8 das Differenzsignal Dz blockiert, die (negative) Anstiegsgeschwindigkeit von i2* zu beschränken, ist ein zweiter Verstärker für das Differenzsignal und eine Maximum-Auswahlschaltung ME9 vorgesehen.

Prinzipiell kann bei der Begrenzerschaltung BG2, wie sie in Fig. 17 dargestellt ist, das aus den beiden hintereinander geschalteten Auswahlgliedern ME8 und ME9 gebildete Auswahlglied MIN2 dem Kennlinienglied XY auch nachgeschaltet werden, wobei dann anstelle des Proportionalreglers V3 ein Regler mit einer quadratischen oder einer anderen nichtlinearen Kennlinie vorteilhaft ist. Das gilt auch für den Multiplizierer MP2 und die Verstärker V2, V3 und V4.

Eine starke Erhöhung des Wirkstromes findet vor allem beim Anfahren statt. Im Bereich kleiner Frequenzen kann Ug vernachlässigt werden, so daß Ucf und damit auch iz ungefähr proportional zu i ist. Mit anderen Worten: Der Grenzwert des für die Kommutierung noch zulässigen Stromes wird im wesentlichen aus dem bei der letzten Ventilzündung kommutierten Strom bestimmt. Der Proportionalitätsfaktor gibt an, wie stark der Strom zwischen zwei Kommutierungen zunehmen darf und liegt in der Praxis zwischen 1,5 und 2,5. Daher ist der Aufbau des Stromes bei niedrigen Frequenzen hauptsächlich durch die Grenze der Kommutierbarkeit bestimmt. Erfolgt z.B. jeweils in 16,6 msec eine Kommutierung, so ist in dieser Zeitspanne bei einer Frequenz f = 20 Hz nur eine Verdoppelung des Stromes zugelassen. Da der Strom sich zwischen Leerlauf und Vollast in vielen Fällen mindestens vervierfacht, kann die Vollast dann frühestens in 33 msec erreicht werden.

Diese Zeit könnte verkürzt werden, wenn durch einen größeren Komponentensollwert i1* die Magnetisierung und damit der Leerlaufstrom von vornherein auf ein hohes Niveau, z.B. die Hälfte des Vollaststromes, angehoben würde. Ein hoher Leerlaufstrom würde jedoch in Dauerbetrieb zu einer Überlastung führen.

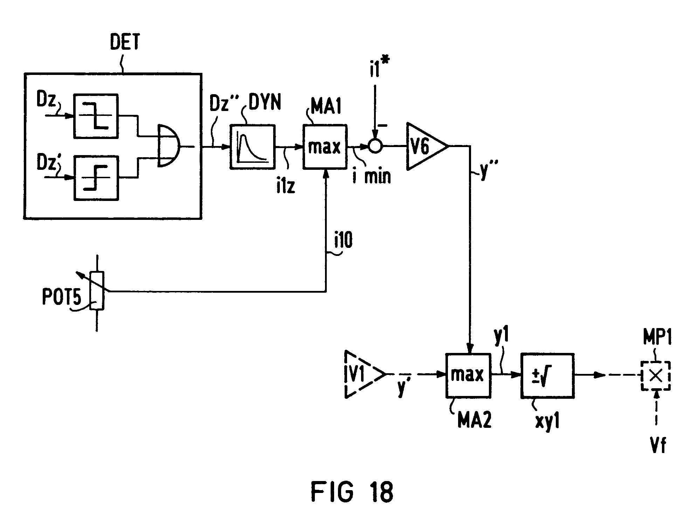

Gemäß Fig. 18 ist beim bevorzugten Ausführungsbeispiel eine dynamische Erhöhung des Leerlaufstromes vorgesehen, d.h. ein Eingriff, bei dem durch ein Ansprechsignal eine Erhöhung von i1* erzeugt wird, die jedoch nach Beendigung des Ansprechsignals wieder mit einer vorgegebenen Zeitkonstante abklingt. Beim bevorzugten Ausführungsbeispiel wird das Ansprechsignal aus den Signalen abgeleitet, die zur Sicherstellung der Kommutierung die Anstiegsgeschwindigkeit des Stromes begrenzen, und das Ansprechsignal löst eine vorübergehende Minimalstrombegrenzung aus.

Gemäß Fig. 18 wird ermittelt eine Detektorschaltung DET aus dem Pegel der Signale Dz und Dz' das Ansprechsignal Dz". Solange dieses Ansprechsignal Dz" anzeigt, daß ein gewisser Pegel der dem Kommutierungsschutz auslösenden Differenzsignale überschritten ist, erzeugt ein Dynamikglied DYN eine ständig steigende Hilfs-Führungsgröße i1z. Aus i1z und einem Mindestwert i10, der an einem Potentiometer POT5 abgegriffen wird, wählt eine Maximalwert-Auswahlstufe MA1 den größeren Wert als Minimalwert imin aus. Dieser Minimalwert imin tritt dann bei einem stärkeren Ansprechen des Kommutierungsschutzes vorübergehend an die Stelle der Führungsgröße i1**. Dies wird dadurch erreicht, daß analog zu dem vom Verstärker V1 gebildeten Differenzsignal y' = V1-(i1** - i1*) nunmehr mittels eines Verstärkers V6 auch ein zu (imin - i1*) proportionales Differenzsignal y" gebildet wird. An einer Maximalwert-AuswahlschaltungMA2 wird der Maximalwert y1 von y' und y" abgegriffen, der dann die Steigung im Integrator INT1 des Hochlaufgebers für den Komponentensollwert i1* bestimmt.

Es können also auch dynamische Änderungen des Komponentensollwertes i1* auftreten, so daß auch die Anstiegsgeschwindigkeit dieses Komponentensollwertes vorteilhaft beschränkt wird. Daher sieht Fig. 18 sowohl ein Kennlinienglied XY1 mit

9

entsprechender Wurzelkennlinie wie auch den bereits in Fig. 5 gezeigten Multiplizierer MP1 am Eingang des Hochlaufintegrators INT1 vor.

Die gesamte Anordnung ermöglicht nun sehr rasche Laständerungen, insbesondere auch sehr rasche Drehzahländerungen. Dann wird auch der Flußsollwert FX*, der bei dem Führungsgrößengeber FG1 (Fig. 5) am Ausgang eines Kenngliedes FN in Abhängigkeit der Drehzahl abgegriffen ist, rasch geändert. Der Fluß ist im stationären Fall gleich dem Produkt aus dem Induktivitätsparameter L der Drehfeldmaschine und dem Magnetisierungsstrom i1, so daß die Führungsgröße i1** des Magnetisierungsstromes am Kennlinienglied FN mittels eines entsprechenden Verstärkers VL und eines den dynamischen Zusammenhang zwischen Fluß und Magnetisierungsstrom berücksichtigenden Dynamikglieds FD abgegriffen ist.

Abschließend sei ein Betriebsfall betrachtet, bei dem der Antrieb vom Leerlauf bei niedrigen Drehzahlen auf eine hohe Drehzahl beschleunigt werden soll. Die Führungsgröße i1** für den Magnetisierungsstrom ist dabei auf einem dem Nennfluß entsprechenden Wert eingestellt, der Drehzahlregler RN erzeugt jedoch im Führungsgrößengeber FG2 eine vom Leerlaufwert i2** = 0 auf einen hohen Wert anspringende Führungsgröße für den Wirkstrom. Der Verstärker V1 ist übersteuert und ein konstanter Wert am Eingang des Integrators INT2 läßt den Komponentensollwert i2* und die Sollwerte wp* und i* ansteigen, wobei zunächst im niedrigen Frequenzbereich rasch der Kommutierungsschutz anspricht und die Auswahlschaltung MIN2 (Fig. 17) und das Kennlinienglied XY begrenzen das Eingangssignal di2*/dt des Hochlaufintegrators INT2 auf den Wert Dz. Der Multiplizierer MP2 behält dabei den Verstärkungsfaktor Vf = 1, da in der Auswahlschaltung MIN zunächst nur der am Potentiometer PO abgegriffene Wert DO = 1 wirksam wird.

Je stärker aber der durch das Differenzsignal Dz erfolgende Kommutierungsschutz eingreift, umso stärker wird gemäß Fig. 18 die Hilfs-Führungsgröße i1z (also auch der minimale Magnetisierungsstrom imin) angehoben und der Verstärker V6 (Fig. 18) erzeugt einen höheren Wert y″ für das Kennlinienglied XY1 und den Multiplizierer MP1. Der Komponentensollwert i1* wächst daher mit erhöhter Anstiegsgeschwindigkeit auf den erhöhten Wert der Hilfs-Führungsgröße i1z an.

Als Folge des angewachsenen Magnetisierungsstroms erhöht sich der zulässige Höchstwert iz. Die Auswahlschaltung ME7 (Fig.17) macht die Signale iz und Dz unwirksam, da nunmehr die Kommutierung sichergestellt ist. Damit ist aber auch die Erhöhung von i1z beendet, und das folgende langsame Abklingen von i1z führt zu einer Verminderung des Komponenten-Sollwerts i1*. Dadurch nimmt der Grenzwert iz wieder ab und der Kommutierungsschutz spricht schließlich wieder an. Es kommt also zu einem Wechsel zwischen ansprechendem Kommutierungsschutz und gleichzeitiger Erhöhung des Leerlaufstromes einerseits, wodurch der Kommutierungsschutz überflüssig wird, und dem Abschalten des Kommutierungsschutzes und dem langsamen Abklingen des Magnetisierungsstromes andererseits, wodurch der Kommutierungsschutz wieder erforderlich wird.

Dieses Wechselspiel führt schließlich zu einem dynamischen Gleichgewichtszustand, bei dem der Kommutierungsschutz nur schwach anspricht und keine wesentliche Restriktion für die Änderungsgeschwindigkeit des Wirkstroms bewirkt. Die Auswahlschaltung MIN2 liefert dabei praktisch das zunächst konstante Ausgangssignal des noch übersteuerten Verstärkers V1 im Hochlaufgeber für i2*.

Die Erhöhung der beiden Komponentensollwerte und der dadurch am differenzierenden Koordinatenwandler KW2 abgegriffene Wert di*/dt kann rasch dazu führen, daß der Grenzwert Uαmax für die Gleichrichteraussteuerung des ersten Stromrichters erreicht wird und daher die Auswahlschaltung MIN (Fig. 6) den Verstärkungsfaktor Vf = Dg auswählt, durch den nunmehr an den Multiplizierern MP1 und MP2 die Änderungsgeschwindigkeit der beiden Komponentensollwerte herabgesetzt wird. Mit wachsender Drehzahl und Bezugsfrequenz f nähert sich auch die Frequenz-Steuergröße Uf dem Maximalwert Ufmax und es kann auch der Fall eintreten, daß die Auswahlschaltung MIN den Wert Vf = Df wählt, um durch weiteres Absenken der Anstiegsgeschwindigkeit eine Übersteuerung des zweiten Stromrichters zu vermeiden. Nähert sich nun der Komponentensollwert i2* seiner Führungsgröße i2**, so ist der Verstärker V1 nicht mehr übersteuert und liefert nun das Signal V1 (i2** - i2*). Sofern in der Auswahlschaltung MIN2 die Differenzsignale Dz und Dz′nicht ansprechen, bewirkt der Kennlinienbildner XY, daß der Komponentensollwert i2* mit konstanter Verzögerung in den Wert i2** übergeht.

Dadurch wird es möglich, den Stromvektor innerhalb sehr kurzer Zeit auf einen Vektor, dessen Komponenten durch entsprechende Führungsgrößen i1** und i2** gegeben sind, einzuregeln ohne dabei unkontrollierte, verkoppelte Bewegungen der Komponenten des Stromvektors anzuregen.

**Patentansprüche**

1. Verfahren Zur entkoppelten Regelung der beiden Komponenten (i1*, i2*) des Stromvektors am Ausgang eines Umrichters mit einem an ein Versorgungsnetz angeschlossenen und am Eingang eines Zwischenkreises (Ld) angeordneten ersten Stromrichter (SR1), dessen Aussteuerung den Gleichstrom des Zwischenkreises bestimmt, und einem aus Ausgang des Zwischenkreises angeschlossenen, zweiten Stromrichter (SR2), dessen Frequenz die Frequenz des Ausgangsstromes bestimmt, mit folgenden Merkmalen:

a) Ein erster Komponentensollwert (i2*) wird für die erste Komponente und ein zweiter Komponentensollwert (i1*) für die zweite Komponente jeweils unter Berücksichtigung einer endlichen Anstiegsgeschwindigkeit (di2*/dt,di1*/dt) aus einer Führungsgröße (i2**,i1**) gebildet,

b) die Austiegsgeschwindigkeit (di2*/dt,di1*/dt) der Komponentensollwerte (i2*,i1*) werden jeweils betriebsabhängig begrenzt,

c) die Komponentensollwerte (i2*,i1*) werden in einen Betragssollwert (i*) und einen Winkelsollwert (wp*) transformiert,

d) mit dem Ausgangssignal (Di) eines Betragsreglers (RI), dem die Regelabweichung zwischen dem Betragssollwert (i*) und dem Betrag (i) eines aus Meßwerten gebildeten Istvektors des Stromes zugeführt wird, wird das Steuersignal (Uα) für den eingangsseitigen Stromrichter (SR1) gebildet,

e) mit dem Ausgangssignal (Df) eines Winkelreglers (RW), dem die Regelabweichung zwischen dem Winkelsollwert (wp*) und dem Winkel (wp) des Istvektors zugeführt ist, wird das Steuersignal (Uf) für den ausgangsseitigen Stromrichter (SR2) gebildet, **gekennzeichnet durch** folgendes weitere Merkmal:

f) die Änderungsgeschwindigkeit (di2*/dt) des ersten Komponentensollwerts (i2*) wird in Abhängigkeit von der Differenz (Df = Vf) zwischen dem Steuersignal (Uf) für den zweiten Stromrichter (SR) und einem einer zulässigen Maximalfrequenz des zweiten Stromrichters entsprechenden Höchstwert (Ufmax) herabgesetzt.

2. Verfahren zur entkoppelten Regelung der beiden Komponenten (i1*, i2*) des Stromvektors am Ausgang eines Umrichters mit einem an ein Versorgungsnetz angeschlossenen und am Eingang eines Zwischenkreises (Ld) angeordneten ersten Stromrichter, dessen Aussteuerung den Gleichstrom des Zwischenkreises bestimmt, und einem aus Ausgang des Zwischenkreises angeschlossenen, zweiten Stromrichter (SR2), dessen Frequenz die Frequenz des Ausgangsstromes bestimmt, mit folgenden Merkmalen:

a) Ein erster Komponentensollwert (i2*) wird für die erste Komponente und ein zweiter Komponentensollwert (i1*) für die zweite Komponente jeweils unter Berücksichtigung einer endlichen Anstiegsgeschwindigkeit (di2*/dt,di1*/dt) aus einer Führungsgröße (i2**,i1**) gebildet;

b) die Austiegsgeschwindigkeit (di2*/dt,di1*/dt) der Komponentensollwerte (i2*,i1*) werden jeweils betriebsabhängig begrenzt,

c) die Komponentensollwerte (i2*, i1*) werden in einen Betragssollwert (i*) und einen Winkelsollwert (wp*) transformiert,

d) mit dem Ausgangssignal (Di) eines Betragsreglers (RI), dem die Regelabweichung zwischen dem Betragssollwert (i*) und dem Betrag (i) eines aus Meßwerten gebildeten Istvektors des Stromes zugeführt wird, wird das Steuersignal (Uα) für den eingangsseitigen Stromrichter (SR1) gebildet,

e) mit dem Ausgangssignal (Df) eines Winkelreglers (RW), dem die Regelabweichung zwischen dem Winkelsollwert (wp*) und dem Winkel (wp) des Istvektors zugeführt ist, wird das Steuersignal (Uf) für den ausgangsseitigen Stromrichter (SR2) gebildet, **gekennzeichnet durch** folgendes weitere Merkmal:

f) die Änderungsgeschwindigkeit (di2*/dt) des ersten Komponentensollwerts (i2*) wird im Gleichrichterbetrieb in Abhängigkeit von der Differenz zwischen dem Steuersignal (Uα) für den ersten Umrichter und einem ersten, einer zulässigen Gleichrichteraussteuerung entsprechenden Grenzwert (Uα max) oder im Wechselrichterbetrieb in Abhängigkeit von der Differenz zwischen dem Steuersignal (Uα) und einem zweiten, einer zulässigen Wechselrichteraussteuerung entsprechenden Grenzwert (Uα min) herabgesetzt (Fig. 5, Fig. 6).

3. Verfahren nach Anspruch 2, **dadurch gekennzeichnet,** daß aus der Differenz (Dg) des Steuersignals für den ersten Stromrichter vom ersten Grenzwert ein erster Änderungsgeschwindigkeitsgrenzwert, aus der Differenz (Dw) vom zweiten Grenzwert ein zweiter Änderungsgeschwindigkeits-Grenzwert und aus der Differenz des Steuersignals (Uf) für den zweiten Stromrichter von einem einer zulässigen Maximalfrequenz des zweiten Stromrichters entsprechenden Höchstwert (Ufmax) ein dritter Änderungsgeschwindigkeits-Grenzwert (Df) gebildet wird und daß die Änderungsgeschwindigkeit (Vf) des ersten Komponentensollwerts vom niedrigsten Änderungsgeschwindigkeits-Grenzwert bestimmt wird (Fig. 6).

4. Verfahren zur entkoppelten Regelung der beiden Komponenten (i1*, i2*) des Stromvektors am Ausgang eines Umrichters mit einem an ein Versorgungsnetz angeschlossenen und am Eingang eines Zwischenkreises (Ld) angeordneten ersten Stromrichter (SR1), dessen Aussteuerung den Gleichstrom des Zwischenkreises bestimmt, und einem aus Ausgang des Zwischenkreises angeschlossenen, zweiten Stromrichter (SR2), dessen Frequenz die Frequenz des Ausgangsstromes bestimmt, mit den Merkmalen a) bis e) des Anspruches 1 oder 2

**gekennzeichnet durch** folgendes weitere Merkmal:

e) bei Annäherung des ersten Komponentensollwerts (i2*) an eine erste Führungsgröße (i2**) wird die Änderungsgeschwindigkeit des ersten Komponentensollwerts derart vorgegeben, daß die zeitliche Ableitung der Änderungsgeschwindigkeit ungefähr konstant ist. (Fig. 8)

5. Verfahren nach Anspruch 4, **dadurch gekennzeichnet,** daß die Änderungsgeschwindigkeit ungefähr nach einer Wurzelkennlinie aus der Differenz zwischen dem Komponentensollwert und einer ersten Führungsgröße (i2**) bestimmt wird (Fig. 8).

6. Verfahren zur entkoppelten Regelung der beiden Komponenten (i1*, i2*) des Stromvektors am Ausgang eines Umrichters mit einem an ein Versorgungsnetz angeschlossenen und am Eingang eines Zwischenkreises (Ld) angeordneten ersten Stromrichter (SR1), dessen Aussteuerung den Gleichstrom des Zwischenkreises bestimmt, und einem aus Ausgang des Zwischenkreises angeschlossenen, zweiten Stromrichter (SR2), dessen Frequenz die Frequenz des Ausgangsstromes bestimmt, mit den Merkmalen a) bis e) des Anspruches 1 oder 2

**gekennzeichnet durch** folgende weitere Merkmale im Fall eines zweiten Stromrichters, dessen Ventile zur Kommutierung des Stroms mittels Kommutierungskondensatoren gelöscht werden:

e) es wird die an den Kommutierungskondensatoren auftretende, wirksame Kommutierungsspannung (Ucl, Ucr bzw. Ucf) und daraus ein zulässiger Stromhöchstwert (iz) bestimmt, und

f) die Änderungsgeschwindigkeit des ersten Komponentensollwerts wird durch Ausregeln der Differenz zwischen dem Stromhöchstwert und dem Betragsollwert (i*) oder des Betrags des Istvektors beeinflußt (Fig. 15, Fig. 16).

7. Verfahren nach Anspruch 6, **dadurch gekennzeichnet,** daß gleichzeitig mit dem Ausregeln der Differenz vorübergehend der zweite Komponentensollwert heraufgesetzt wird (Fig. 18).

8. Verfahren nach einem der Ansprüche 1, 2, 4 oder 6, **dadurch gekennzeichnet,** daß die Spannung (UD) des Zwischenkreises und die zeitliche Ableitung des Betragsollwertes zum Ausgangssignal (Di) des Betragsreglers addiert und daß die Ableitung des Winkelsollwertes gebildet und zusammen mit einer Bezugsfrequenz (f) für den Ausgangsstrom dem Ausgangssignal (Df) des Winkelreglers aufgeschaltet wird (Fig. 5).

9. Schaltungsanordnung mit

a) einem an ein Netz angeschlossenen ersten Stromrichter (SR1),

b) einem über einen Stromzwischenkreis (Ld) an den ersten Stromrichter angeschlossenen zweiten Stromrichter (SR2),

c) einem Steuergrößenrechner (CAL), der aus Betriebsdaten des Umrichters und/oder einer daran angeschlossenen Last den Betrag und Winkel eines den Ausgangsstrom beschreibenden Stromvektors errechnet,

d) einem ersten und einem zweiten Führungsgrößengeber (FG1 und FG2) zur Vorgabe einer ersten und einer zweiten Führungsgröße (i1**, i2**) für die Komponentensollwerte,

e) einem ersten und einem zweiten Hochlaufgeber, enthaltend einen ersten und einen zweiten Hochlaufintegrator (INT1, INT2), an denen ein erster und ein zweiter Komponentensollwert (i1*, i2*) abgegriffen wird, wobei die Komponentensollwerte jeweils mit einer veränderlichen Änderungsgeschwindigkeit (di1*/dt, di2*/dt) an die Führungsgrößen angeglichen werden,

f) einem Koordinatenwandler, der aus den beiden Komponentensollwerten einen Betragsollwert (i*) und einen Winkelsollwert (wp*) berechnet,

g) einem Betragsregler (RI), dem der Betragsollwert und der Betrag des Stromvektors zugeführt sind und an dem ein Steuersignal (Uα) für den ersten Stromrichter (SR1) abgegriffen ist, und

h) einem Winkelregler (RW), dem der Winkelsollwert und der Winkel des Stromvektors zugeführt sind und an dem ein Steuersignal (Uf) für den ausgangsseitigen Stromrichter abgegriffen ist,
**gekennzeichnet durch**
i) Regleranordnung zur Vorgabe der Änderungsgeschwindigkeit ($di2^*/dt$) des ersten Komponentensollwerts (i2*) in Abhängigkeit eines mittels eines Vergleichers gebildeten Differenzsignals (Df), wobei am ersten Eingang des Vergleichers ein Maximalwert (Ufmax), an seinem zweiten Eingang das Steuersignal (Uf) des zweiten Umrichters (SR2) anstehen und der Ausgang des Vergleichers über einen Verstärker (V2) mit einer Minimalwert-Auswahlschaltung (ME1) verbunden ist, an dessen Eingang ein einstellbarer Normalwert (DO) ansteht und der Ausgang der Auswahlschaltung (ME1) mit einem Eingang des ersten und zweiten Hochlaufgebers verknüpft ist.

10. Schaltungsanordnung mit
    a) einem an ein Netz angeschlossenen ersten Stromrichter (SR1),
    b) einem über einen Stromzwischenkreis (Ld) an den ersten Stromrichter angeschlossenen zweiten Stromrichter (SR2),
    c) einen Steuergrößenrechner (CAL), der aus Betriebsdaten des Umrichters und/oder einer daran angeschlossenen Last den Betrag und Winkel eines den Ausgangsstrom beschreibenden Stromvektors errechnet,
    d) einem ersten und einem zweiten Führungsgrößengeber (FG1 und FG2) zur Vorgabe einer ersten und einer zweiten Führungsgröße (i1**, i2***) für die Komponentensollwerte,
    e) einem ersten und einem zweiten Hochlaufgeber, enthaltend einen ersten und einen zweiten Hochlaufintegrator (INT1,INT2), an denen ein erster und ein zweiter Komponentensollwert (i1*, i2*) abgegriffen wird, wobei die Komponentensollwerte jeweils mit einer veränderlichen Änderungsgeschwindigkeit ($di1^*/dt$, $di2^*/dt$) an die Führungsgrößen angeglichen werden,
    f) einem Koordinatenwandler, der aus den beiden Komponentensollwerten einen Betragssollwert (i*) und einen Winkelsollwert (wp*) berechnet,
    g) einem Betragsregler (RI), dem der Betragssollwert und der Betrag des Stromvektors zugeführt sind und an dem ein Steuersignal (Uα) für den ersten Stromrichter (SR1) abgegriffen ist, und

h) einem Winkelregler (RW), dem der Winkelsollwert und der Winkel des Stromvektors zugeführt sind und an dem ein Steuersignal (Uf) für den ausgangsseitigen Stromrichter abgegriffen ist,
**gekennzeichnet durch**
i) einen ersten und einen zweiten Differenzbildner (V3, V4) für die Differenz zwischen dem Steuersignal für den ersten Umrichter und einem vorgegebenen Maximalwert (U max) und Minimalwert (U min),
j) einer Auswahlschaltung (MIN) zur Auswahl des kleinsten Wertes der beiden Differenzen, und
k) einen weiteren Differenzenbildner (V2), dem das Steuersignal (Uf) des zweiten Umrichters und ein vorgegebener Maximalwert (Ufmax) zugeführt ist und dessen Ausgangssignal der Auswahlschaltung (MIN) zusätzlich aufgeschaltet ist.

11. Schaltungsanordnung nach Anspruch 10, **dadurch gekennzeichnet,** daß der erste Hochlaufgeber ein Subtraktionsglied für die erste Führungsgröße (i2**) und den Komponentensollwert (i2*) einen Verstärker und einen dem Integratoreingang vorgeschalteten Multiplizierer (MP2) enthält und daß dem Multiplizierer zusätzlich ein aus der Differenz gebildeter Grenzwert (Vf) zugeführt ist.

12. Schaltungsanordnung nach Anspruch 11, **dadurch gekennzeichnet,** daß dem ersten Multiplizierer (MP2) ein Kennlinienglied (XY) mit Wurzelkennlinie in Reihe geschaltet ist.

13. Schaltungsanordnung nach Anspruch 10, **gekennzeichnet durch**
    einen zweiten Stromrichter (SR2), der Kommutierungskondensatoren (C1,...,C6) aufweist, einen Kommutierungsspannungs-Detektor zur Bestimmung der wirksamen Kommutierungskondensatorspannung und einen nachgeschalteten Stromgrenzwert-Geber zur Vorgabe eines Stromgrenzwertes, eine Vergleichsschaltung, die aus der Abweichung des Betragssollwertes oder des Betrags des Stromvektors einen weiteren Grenzwert (Dz) für die Änderungsgeschwindigkeit des ersten Komponentensollwerts (i2*) bildet,
    und einer Minimalwert-Auswahlschaltung (ME8), die eingangsseitig einerseits mit der Vergleicherschaltung und andererseits mit dem Ausgang des Verstärkers (V1) des zweiten Hochlaufgebers verknüpft ist.

**14.** Schaltungsanordnung nach Anspruch 13, **dadurch gekennzeichnet,** daß der Kommutierungsspannungs-Detektor vom Steuergrößenrechner gespeist und von den Zündimpulsen des zweiten Stromrichters getriggert ist.

**15.** Schaltungsanordnung nach Anspruch 13, **gekennzeichnet durch** einen Detektor für den weiteren Grenzwert und ein vom Ausgangssignal des Detektors angestoßenes Dynamikglied, das bei einer Verringerung des weiteren Grenzwertes eine vorübergehend erhöhte Hilfs-Führungsgröße dem zweiten Hochlaufgeber zur vorübergehenden Erhöhung des zweiten Komponentensollwertes (i1*) aufschaltet.

**16.** Schaltungsanordnung nach Anspruch 10, **gekennzeichnet durch** einen weiteren Koordinatenwandler, der die Änderung des Betragssollwertes und die Änderung des Winkelsollwertes errechnet, ein erstes Vorsteuerglied, dem das Ausgangssignal (Di) des Betragsreglers (RI), die Änderung (dwp*/dt) des Betragssollwertes und ein Signal für die Spannung (UD) des Zwischenkreises aufgeschaltet und an dem die Steuerspannung (Uα) des ersten Stromrichters (SR1) abgegriffen ist, und ein zweites Vorsteuerglied, dem das Ausgangssignal (Df) des Winkelreglers (RW), die Änderung des Winkelsollwertes (dwp*/dt) und eine vom Steuergrößenrechner (CAL) bereitgestelltes Bezugsfrequenz-Signal (f) zugeführt und an dem die Steuerspannung (Uf) des zweiten Stromrichters (SR2) abgegriffen ist.

**17.** Schaltungsanordnung nach Anspruch 9, **dadurch gekennzeichnet,** daß an den Ausgang des zweiten Stromrichters eine Drehfeldmaschine (M) angeschlossen ist.

**18.** Schaltungsanordnung mit
a) einem an ein Netz angeschlossenen ersten Stromrichter (SR1),
b) einem über einen Stromzwischenkreis (Ld) an den ersten Stromrichter angeschlossenen zweiten Stromrichter (SR2) mit Kommutierungskondensatoren,
c) einem Steuergrößenrechner (CAL), der aus Betriebsdaten des Umrichters und/oder einer daran angeschlossenen Last den Betrag und Winkel eines den Ausgangsstrom beschreibenden Stromvektors errechnet,
d) einem ersten und einem zweiten Führungsgrößengeber (FG1 und FG2) zur Vorgabe einer ersten und einer zweiten Führungsgröße (i1**, i2**) für die Komponentensollwerte,

e) einem ersten und einem zweiten Hochlaufgeber, enthaltend einen ersten und einen zweiten Hochlaufintegrator (INT1, INT2), an denen ein erster und ein zweiter Komponentensollwert (i1*, i2*) abgegriffen wird, wobei die Komponentensollwerte jeweils mit einer veränderlichen Änderungsgeschwindigkeit (di1*/dt, di2*/dt) an die Führungsgrößen angeglichen werden,
f) einem Koordinatenwandler, der aus den beiden Komponentensollwerten einen Betragssollwert (i*) und einen Winkelsollwert (wp*) berechnet,
g) einem Betragsregler (RI) , dem der Betragssollwert und der Betrag des Stromvektors zugeführt sind und an dem ein Steuersignal (Uα) für den ersten Stromrichter (SR1) abgegriffen ist, und
h) einem Winkelregler (RW), dem der Winkelsollwert und der Winkel des Stromvektors zugeführt sind und an dem ein Steuersignal (Uf) für den ausgangsseitigen Stromrichter abgegriffen ist,
**gekennzeichnet durch**
i) einen Kommutierungsspannungs-Detektor zur Bestimmung der wirksamen Kommutierungskondensator-Spannung und einen nachgeschalteten Stromgrenzwert-Geber zur Bestimmung eines Stromgrenzwertes,
j) eine Vergleichsschaltung, die aus der Abweichung des Betragssollwertes oder des Betrags des Stromvektors einen Grenzwert für die Änderungsgeschwindigkeit des ersten Komponentensollwertes bildet und
k) eine Maximalwert-Auswahlschaltung (MA2) mit nachgeschalteten Kennliniengliedern (xyl), die im Hochlaufgeber die Änderungsgeschwindigkeit des ersten Komponentensollwertes in Abhängigkeit vom Grenzwert herabsetzen.

**19.** Schaltungsanordnung nach Anspruch 18, **gekennzeichnet durch** einen Differenzenbildner (V1) für die Abweichung des ersten Komponentensollwertes (i2*) von der ersten Führungsgröße (i2**) und einen nachgeschalteten Kennliniengeber, dessen Ausgangssignal den Mitteln zur Begrenzung der Änderungsgeschwindigkeit des ersten Hochlaufgebers zugeführt ist.

**20.** Schaltungsanordnung mit
a) einem an ein Netz angeschlossenen ersten Stromrichter (SR1),
b) einem über einen Stromzwischenkreis (Ld) an den ersten Stromrichter angeschlossenen zweiten Stromrichter (SR2),

c) einem Steuergroßenrechner (CAL), der aus Betriebsdaten des Umrichters und/oder einer daran angeschlossenen Last den Betrag und Winkel eines den Ausgangsstrom beschreibenden Stromvektors errechnet,

d) einem ersten und einem zweiten Führungsgrößengeber (FG1 und FG2) zur Vorgabe einer ersten und einer zweiten Führungsgröße (i1\*\*, i2\*\*) für die Komponentensollwerte,

e) einem ersten und einem zweiten Hochlaufgeber, enthaltend einen ersten und einen zweiten Hochlaufintegrator (INT1, INT2), an denen ein erster und ein zweiter Komponentensollwert (i1\*, i2\*) abgegriffen wird, wobei die Komponentensollwerte jeweils mit einer veränderlichen Änderungsgeschwindigkeit (di1\*/dt, di2\*/dt) an die Führungsgrößen angeglichen werden,

f) einem Koordinatenwandler, der aus den beiden Komponentensollwerten einen Betragssollwert (i\*) und einen Winkelsollwert (wp\*) berechnet,

g) einem Betragsregler (RI), dem der Betragssollwert und der Betrag des Stromvektors zugeführt sind und an dem ein Steuersignal (Uα) für den ersten Stromrichter (SR1) abgegriffen ist, und

h) einem Winkelregler (RW), dem der Winkelsollwert und der Winkel des Stromvektors zugeführt sind und an dem ein Steuersignal (Uf) für den ausgangsseitigen Stromrichter abgegriffen ist,

**gekennzeichnet durch**

i) ein dem Hochintegrator des ersten Hochlaufgebers vorgeschaltetes Kennlinienglied mit Wurzelkennlinie.

## Claims

1. Method for the decoupled regulation of the two components (i1\*, i2\*) of the current vector at the output of a converter, with a first current converter (SR1), attached to a supply network and arranged at the input of an intermediate circuit (Ld), whose modulation determines the direct current of the intermediate circuit, and a second current converter (SR2), attached out of output of the intermediate circuit, whose frequency determines the frequency of the output current, having the following features:

   a) a first desired component value (i2\*) is formed for the first component and a second desired component value (i1\*) is formed for the second component in each case under consideration of a final rise speed (di2\*/dt,di1\*/dt) from a command variable (i2\*\*,i1\*\*),

   b) the rise speed (di2\*/dt,di1\*/dt) of the desired component values (i2\*,i1\*) is in each case limited dependent on operation,

   c) the desired component values (i2\*,i1\*) are transformed into a desired magnitude value (i\*) and a desired angle value (wp\*),

   d) with the output signal (Di) of a magnitude regulator (RI), to which there is supplied the regulating deviation between the desired magnitude value (i\*) and the magnitude (i) of an actual vector of the current formed from measured values, the control signal (U α) for the current converter (SR1) on the input side is formed,

   e) with the output signal (Df) of an angle regulator (RW), to which there is supplied the regulating deviation between the desired angle value (wp\*) and the angle (wp) of the actual vector, the control signal (Uf) for the current converter (SR2) on the output side is formed,

   characterized by the following further feature:

   f) the change speed (di2\*/dt) of the first desired component value (i2\*) is reduced in dependence upon the difference (Df = Vf) between the control signal (Uf) for the second current converter (SR) and a maximum value (Ufmax) corresponding to an admissible maximum frequency of the second current converter.

2. Method for the decoupled regulation of the two components (i1\*, i2\*) of the current vector at the output of a converter with a first current converter, attached to a supply network and arranged at the input of an intermediate circuit (Ld), whose modulation determines the direct current of the intermediate circuit, and a second current converter (SR2) attached out of output of the intermediate circuit, whose frequency determines the frequency of the output current, having the following features:

   a) a first desired component value (i2\*) is formed for the first component and a second desired component value (i1\*) is formed for the second component in each case under consideration of a final rise speed (di2\*/dt,di1\*/dt) from a command variable (i2\*\*,i1\*\*),

   b) the rise speed (di2\*/dt,di1\*/dt) of the desired component values (i2\*,i1\*) is limited in each case dependent on operation,

   c) the desired component values (i2\*, i1\*) are transformed into a desired magnitude value (i\*) and a desired angle value (wp\*),

d) with the output signal (Di) of a magnitude regulator (RI), to which there is supplied the regulating deviation between the desired magnitude value (i*) and the magnitude (i) of an actual vector of the current formed from measured values, the control signal (U $\alpha$) for the current converter (SRI) on the input side is formed,

e) with the output signal (Df) of an angle regulator (RW), to which there is supplied the regulating deviation between the desired angle value (wp*) and the angle (wp) of the actual vector, the control signal (Uf) for the current converter (SR2) on the output side is formed,

characterized by the following further feature:

f) the change speed (di2*/dt) of the first desired component value (i2*) is reduced in the rectifier operation in dependence upon the difference between the control signal (U $\alpha$) for the first converter and a first limiting value (U$\alpha$ max), corresponding to an admissible rectifier modulation, or in the inverter operation in dependence upon the difference between the control signal (U $\alpha$) and a second limiting value (U$\alpha$ min) corresponding to an admissible inverter modulation (Figure 5, Figure 6).

3. Method according to claim 2, characterized in that from the difference (Dg) of the control signal for the first current converter a first change-speed limiting value is formed by the first limiting value, from the difference (Dw) a second change-speed limiting value is formed by the second limiting value and from the difference of the control signal (Uf) for the second current converter a third change-speed limiting value (Df) is formed by a maximum value (Ufmax) corresponding to an admissible maximum frequency of the second current converter, and that the change speed (Vf) of the first desired component value is determined by the lowest change-speed limiting value (Figure 6).

4. Method for the decoupled regulation of the two components (il*, i2*) of the current vector at the output of a converter with a first current converter (SR1), attached to a supply network and arranged at the input of an intermediate circuit (Ld), whose modulation determines the direct current of the intermediate circuit, and a second current converter (SR2) attached out of output of the intermediate circuit, whose frequency determines the frequency of the output current, having the features a) to e) of claim 1 or 2,

characterized by the following further feature:

e) with approximation of the first desired component value (i2*) to a first command variable (i2**) the change speed of the first desired component value is specified in such a way that the temporal derivation of the change speed is approximately constant (Figure 8).

5. Method according to claim 4, characterized in that the change speed is determined approximately according to a root characteristic from the difference between the desired component value and a first command variable (i2**) (Figure 8).

6. Method for the decoupled regulation of the two components (i1*, i2*) of the current vector at the output of a converter with a first current converter (SR1), attached to a supply network and arranged at the input of an intermediate circuit (Ld), whose modulation determines the direct current of the intermediate circuit, and a second current converter (SR2), attached out of output of the intermediate circuit, whose frequency determines the frequency of the output current, having the features a) to e) of claim 1 or 2,

characterized by the following further features in the case of a second current converter, whose valves are turned off for the commutation of the current by means of commutation capacitors:

e) the effective commutation voltage (Ucl, Ucr or Ucf) occurring at the commutation capacitors is determined and therefrom an admissible maximum current value (iz), and

f) the change speed of the first desired component value is influenced through correction of the difference between the maximum current value and the desired magnitude value (i*) or the magnitude of the actual vector (Figure 15, Figure 16).

7. Method according to claim 6, characterized in that simultaneously with the correction of the difference the second desired component value is temporarily increased (Figure 18).

8. Method according to one of claims 1, 2, 4 or 6, characterized in that the voltage (UD) of the intermediate circuit and the temporal derivation of the desired magnitude value is added to the output signal (Di) of the magnitude regulator and that the derivation of the desired angle value is formed and together with a reference frequency (f) for the output current is applied to the output signal (Df) of the angle regulator (Figure 5).

9.  Circuit arrangement with

a) a first current converter (SR1) attached to a network,

b) a second current converter (SR2) attached to the first current converter by means of a current intermediate circuit (Ld),

c) a controlled-variable calculator (CAL), which calculates the magnitude and angle of a current vector describing the output current from operational data of the converter and/or a load attached thereto,

d) a first and a second command variable transmitter (FG1 and FG2) for the specification of a first and a second command variable (i1**, i2**) for the desired component values,

e) a first and a second acceleration transmitter, containing a first and a second acceleration integrator (INT1, INT2), at which a first and a second desired component value (i1*, i2*) is picked up, whereby the desired component values are each equated to the command variables at a varying change speed (di1*/dt, di2*/dt),

f) a coordinate transformer which calculates a desired magnitude value (i*) and a desired angle value (wp*) from the two desired component values,

g) a magnitude regulator (RI), to which there are supplied the desired magnitude value and the magnitude of the current vector and at which a control signal (U $\alpha$) for the first current converter (SR1) is picked up, and

h) an angle regulator (RW), to which there are supplied the desired angle value and the angle of the current vector and at which a control signal (Uf) for the current converter on the output side is picked up,

characterized by

i) regulator arrangement for the specification of the change speed (di2*/dt) of the first desired component value (i2*) in dependence upon a differential signal (Df) formed by means of a comparator, whereby at the first input of the comparator there is present a maximum value (Ufmax), at its second input the control signal (Uf) of the second converter (SR2) and the output of the comparator is connected by means of an amplifier (V2) to a minimum-value selection circuit (ME1), at the input of which there is present an adjustable normal value (DO) and the output of the selection circuit (ME1) is linked with an input of the first and second acceleration transmitter.

10. Circuit arrangement with

a) a first current converter (SR1) attached to a network,

b) a second current converter (SR2) attached to the first current converter by means of a current intermediate circuit (Ld),

c) a controlled-variable calculator (CAL), which calculates the magnitude and angle of a current vector describing the output current from operational data of the converter and/or a load attached thereto,

d) a first and a second command variable transmitter (FG1 and FG2) for the specification of a first and a second command variable (i1**, i2**) for the desired component values,

e) a first and a second acceleration transmitter, containing a first and a second acceleration integrator (INT1,INT2), at which a first and a second desired component value (i1*, i2*) is picked up, whereby the desired component values are in each case equated to the command variables at a varying change speed (di1*/dt, di2*/dt),

f) a coordinate transformer which calculates a desired magnitude value (i*) and a desired angle value (wp*) from the two desired component values,

g) a magnitude regulator (RI), to which there are supplied the desired magnitude value and the magnitude of the current vector and at which a control signal (U $\alpha$) for the first current converter (SR1) is picked up, and

h) an angle regulator (RW), to which there are supplied the desired angle value and the angle of the current vector and at which a control signal (Uf) for the current converter on the output side is picked up,

characterized by

i) a first and a second differential former (V3, V4) for the difference between the control signal for the first converter and a specified maximum value (U max) and minimum value (U min),

j) a selection circuit (MIN) for the selection of the smallest value of the two differences, and

k) a further differential former (V2), to which there is supplied the control signal (Uf) of the second converter and a specified maximum value (Ufmax) and whose output signal is additionally applied to the selection circuit (MIN).

11. Circuit arrangement according to claim 10, characterized in that the first acceleration transmitter contains a subtraction element for the first command variable (i2***) and the desired component value (i2*) an amplifier and a multiplier (Mp2) connected in series with the integrator input and in that a limiting value (Vf) formed from the difference is supplied additionally to the multiplier.

12. Circuit arrangement according to claim 11, characterized in that a characteristic element (XY) with a root characteristic is connected in series with the first multiplier (MP2).

13. Circuit arrangement according to claim 10, characterized by
a second current converter (SR2), which has commutation capacitors (C1,...,C6), a commutation-voltage detector for the determination of the effective commutation capacitor voltage and a subsequently connected current-limiting-value transmitter for the specification of a current limiting value, a comparator circuit which forms from the deviation of the desired magnitude value or the magnitude of the current vector a further limiting value (Dz) for the change speed of the first desired component value (i2*),
and a minimum-value selection circuit (ME8) which is linked on the input side on the one hand with the comparator circuit and on the other hand with the output of the amplifier (V1) of the second acceleration transmitter.

14. Circuit arrangement according to claim 13, characterized in that the commutation-voltage detector is fed by the controlled-variable calculator and is triggered by the ignition pulses of the second current converter.

15. Circuit arrangement according to claim 13, characterized by a detector for the further limiting value and a dynamics element activated by the output signal of the detector, which dynamics element with a reduction of the further limiting value applies a temporarily increased auxiliary command variable to the second acceleration transmitter for the temporary increase of the second desired component value (i1*).

16. Circuit arrangement according to claim 10, characterized by a further coordinate transformer which calculates the change of the desired magnitude value and the change of the desired angle value, a first precontrol element, to which there is applied the output signal (Di) of the magnitude regulator (RI), the change (dwp*/dt) of the desired magnitude value and a signal for the voltage (UD) of the intermediate circuit and at which the control voltage (U α) of the first current converter (SR1) is picked up, and a second precontrol element, to which there is supplied the output signal (Df) of the angle regulator (RW), the change of the desired angle value (dwp*/dt) and a reference-frequency signal (f) prepared by the controlled-variable calculator (CAL) and at which the control voltage (Uf) of the second current converter (SR2) is picked up.

17. Circuit arrangement according to claim 9, characterized in that a rotating-field machine (M) is attached to the output of the second current converter.

18. Circuit arrangement with
a) a first current converter (SR1) attached to a network,
b) a second current converter (SR2) attached to the first current converter by means of a current intermediate circuit (Ld), with commutation capacitors,
c) a controlled-variable calculator (CAL), which calculates the magnitude and angle of a current vector describing the output current from operational data of the converter and/or a load attached thereto,
d) a first and a second command-variable transmitter (FG1 and FG2) for the specification of a first and a second command variable (i1***, i2***) for the desired component values,
e) a first and a second acceleration transmitter, containing a first and a second acceleration integrator (INT1, INT2), at which a first and a second desired component value (i1*, i2*) is picked up, whereby the desired component values in each case are equated to the command variables at a varying change speed (di1*/dt, di2*/dt),
f) a coordinate transformer which calculates a desired magnitude value (i*) and a desired angle value (wp*) from the two desired component values,
g) a magnitude regulator (RI) to which there are supplied the desired magnitude value and the magnitude of the current vector and at which a control signal (U α) for the first current converter (SR1) is picked up, and
h) an angle regulator (RW), to which there are supplied the desired angle value and the angle of the current vector and at which a control signal (Uf) for the current converter on the output side is picked up, characterized by

i) a commutation-voltage detector for the determination of the effective commutation capacitor voltage and a subsequently connected current-limiting-value transmitter for the determination of a current limiting value,

j) a comparator circuit, which forms a limiting value for the change speed of the first desired component value from the deviation of the desired magnitude value or the magnitude of the current vector and

k) a maximum-value selection circuit (MA2) with subsequently connected characteristic elements (xyl), which in the acceleration transmitter reduce the change speed of the first desired component value in dependence upon the limiting value.

19. Circuit arrangement according to claim 18, characterized by a differential former (V1) for the deviation of the first desired component value (i2*) from the first command variable (i2***) and a subsequently connected characteristic transmitter, whose output signal is supplied to the means for the limitation of the change speed of the first acceleration transmitter.

20. Circuit arrangement with

a) a first current converter (SR1) attached to a network,

b) a second current converter (SR2) attached to the first current converter by means of a current intermediate circuit (Ld),

c) a controlled-variable calculator (CAL) which calculates the magnitude and angle of a current vector describing the output current from operational data of the converter and/or a load attached thereto,

d) a first and a second command-variable transmitter (FG1 and FG2) for the specification of a first and a second command variable (i1***, i2***) for the desired component values,

e) a first and a second acceleration transmitter, containing a first and a second acceleration integrator (INT1, INT2), at which a first and a second desired component value (i1*, i2*) is picked up, whereby the desired component values in each case are equated to the command variables at a varying change speed (di1*/dt, di2*/dt),

f) a coordinate transformer which calculates a desired magnitude value (i*) and a desired angle value (wp*) from the two desired component values,

g) a magnitude regulator (RI), to which there are supplied the desired magnitude value and the magnitude of the current vector and at which a control signal (U α) for the first current converter (SR1) is picked up, and

h) an angle regulator (RW), to which there are supplied the desired angle value and the angle of the current vector and at which a control signal (Uf) for the current converter on the output side is picked up, characterized by

i) a characteristic element connected in series with the high integrator of the first acceleration transmitter, with a root characteristic.

**Revendications**

1. Procédé de réglage autonome des deux composantes (i1*,i2*) du vecteur courant à la sortie d'un mutateur comportant un premier redresseur statique (SR1) qui est raccordé à un réseau d'alimentation et qui est disposé à l'entrée d'un circuit intermédiaire (Ld) et dont la commande détermine le courant continu du circuit intermédiaire, et un second redresseur statique (SR2), qui est raccordé à la sortie du circuit intermédiaire et dont la fréquence détermine la fréquence du courant de sortie, présentant les caractéristiques suivantes :

a) une première valeur de consigne (i2*) est formée pour la première composante et une seconde valeur de consigne (i1*) est formée pour la seconde composante, respectivement en tenant compte d'une vitesse finale de montée (di2*/dt, di1*/dt) à partir d'une grandeur pilote (i2***, I1***),

b) les vitesses de montée (di2*/dt, di1*/dt) des valeurs de consigne (i2*, i1*) des composantes sont limitées respectivement sur la base du fonctionnement,

c) les valeurs de consigne (i2*,i1*) des composantes sont transformées en une valeur de consigne (i*) de la valeur absolue en une valeur de consigne (wp*) de l'angle,

d) le signal de commande (Uα) pour le convertisseur statique (SR1) situé côté entrée est formé à partir du signal de sortie (Di) d'un régulateur (RI) de la valeur absolue, de l'écart de réglage entre la valeur de consigne (i*) de la valeur absolue et la valeur (i) d'un vecteur réel, formé à partir des valeurs de mesure, du courant,

e) le signal de commande (Uf) pour le convertisseur statique (SR2) situé côté sortie est formé à partir du signal de sortie (Df) d'un régulateur (RW) de l'angle, de l'écart de réglage entre la valeur de consigne (wp*) de l'angle et l'angle (wp) du vecteur réel caractérisé par la particularité supplémentaire suivante :

f) la vitesse de variation (di2*/dt) de la valeur de consigne (i2*) de la première composante est réduite, en fonction de la différence (Df = Vf) entre le signal de commande (Uf) pour le second convertisseur statique (SR) et une valeur maximale (Ufmax) qui correspond à une fréquence maximale admissible du second convertisseur statique.

2. Procédé de réglage autonome des deux composantes (i1*,i2*) du vecteur courant à la sortie d'un mutateur comportant un premier redresseur statique qui est raccordé à un réseau d'alimentation et qui est disposé à l'entrée d'un circuit intermédiaire (Ld) et dont la commande détermine le courant continu du circuit intermédiaire, et un second redresseur statique (SR2), qui est raccordé à la sortie du circuit intermédiaire et dont la fréquence détermine la fréquence du courant de sortie, présentant les caractéristiques suivantes :

a) une première valeur de consigne (i2*) est formée pour la première composante et une seconde valeur de consigne (i1*) est formée pour la seconde composante, respectivement en tenant compte d'une vitesse finale de montée (di2*/dt, di1*/dt) à partir d'une grandeur pilote (i2**, I1**),

b) les vitesses de montée (di2*/dt, di1*/dt) des valeurs de consigne (i2*, i1*) des composantes sont limitées respectivement sur la base du fonctionnement,

c) les valeurs de consigne (i2*,i1*) des composantes sont transformées en une valeur de consigne (i*) de la valeur absolue en une valeur de consigne (wp*) de l'angle,

d) le signal de commande (Uα) pour le convertisseur statique (SR1) situé côté entrée est formé à partir du signal de sortie (Di) d'un régulateur (RI) de la valeur absolue, de l'écart de réglage entre la valeur de consigne (i*) de la valeur absolue et la valeur (i) d'un vecteur réel, formé à partir des valeurs de mesure, du courant,

e) le signal de commande (Uf) pour le convertisseur statique (SR2) situé côté sortie est formé à partir du signal de sortie (Df) d'un régulateur (RW) de l'angle, de l'écart de réglage entre la valeur de consigne (wp*) de l'angle et l'angle (wp) du vecteur réel caractérisé par la particularité supplémentaire suivante :

f) la vitesse de variation (di2*/dt) de la valeur de consigne (i2*) de la première composante est réduite, dans le fonctionnement en redresseur, en fonction de la différence entre le signal de commande (Uα) pour le premier mutateur et une première valeur limite (Uαmax), qui correspond à une modulation admissible du redresseur, ou, dans le fonctionnement en onduleur, en fonction de la différence entre le signal de commande (Uα) et une autre valeur limite (Uαmin) qui correspond à une modulation admissible de l'onduleur (figure 5, figure 6).

3. Procédé suivant la revendication 2, caractérisé par le fait qu'une première valeur limite de la vitesse de variation est formée à partir de la différence (Dg) entre le signal de commande pour le premier convertisseur statique et la première valeur limite, qu'une seconde valeur limite de la vitesse de variation est formée à partir de la différence (Dw) par rapport à la seconde valeur limite, et qu'une troisième valeur limite (Df) de la vitesse de variation est formée à partir de la différence entre le signal de commande (Uf) pour le second convertisseur statique et une valeur maximale (Ufmax) qui correspond à une fréquence maximale admissible du second convertisseur statique, et que la vitesse de variation (Vf) de la valeur de consigne de la première composante est déterminée par la valeur limite la plus faible de la vitesse de variation (figure 6).

4. Procédé de réglage indépendant des deux composantes (i1*,i2*) du vecteur courant à la sortie d'un mutateur comportant un premier redresseur statique (SR1) qui est raccordé à un réseau d'alimentation et qui est disposé à l'entrée d'un circuit intermédiaire (Ld) et dont la commande détermine le courant continu du circuit intermédiaire, et un second redresseur statique (SR2), qui est raccordé à la sortie du circuit intermédiaire et dont la fréquence détermine la fréquence du courant de sortie, présentant les caractéristiques a) à e) de la revendication 1 ou 2,

caractérisé par la particularité supplémentaire suivante :

e) lorsque la valeur de consigne (i2*) de la première composante se rapproche d'une première grandeur pilote (i2**), la vitesse de variation de la valeur de consigne de la première composante est prédéterminée de manière que la dérivée dans le temps de la vitesse de variation soit approximativement constante. (figure 8).

5. Procédé suivant la revendication 4, caractérisé par le fait que la vitesse de variation est déterminée approximativement suivant une courbe caractéristique basée sur la racine carrée de la différence entre la valeur de consigne de la composante et la première grandeur pilote (i2**) (figure 8).

6. Procédé de réglage indépendant des deux composantes (il*,i2*) du vecteur courant à la sortie d'un mutateur comportant un premier redresseur statique (SR1) qui est raccordé à un réseau d'alimentation et qui est disposé à l'entrée d'un circuit intermédiaire (Ld) et dont la commande détermine le courant continu du circuit intermédiaire, et un second redresseur statique (SR2), qui est raccordé à la sortie du circuit intermédiaire et dont la fréquence détermine la fréquence du courant de sortie, présentant les caractéristiques (a) à (e) de la revendication 1 ou 2, caractérisé par les particularités supplémentaires suivantes dans le cas d'un second convertisseur statique, dont les valves sont éteintes pour la commutation du courant au moyen de condensateurs de commutation :

    i) la tension de commutation effective (Ucl, Ucr ou Ucf), qui apparaît aux bornes des condensateurs de commutation, est déterminée et une valeur maximale admissible (iz) du courant est déterminée à partir de là, et

    f) la vitesse de variation de la valeur de consigne de la première composante est influencée par élimination par réglage de la différence entre la valeur maximale du courant et la valeur de consigne (i*) de la valeur absolue ou de la valeur absolue du vecteur réel (figure 15, figure 16).

7. Procédé suivant la revendication 6, caractérisé par le fait que, de façon transitoire, la valeur de consigne de la seconde composante est réduite en même temps que s'effectue l'élimination par réglage de la différence (figure 18).

8. Procédé suivant la revendication 1, 2, 4 ou 6, caractérisé par le fait que la tension (UD) du circuit intermédiaire et la dérivée par rapport au temps de la valeur de consigne de la valeur absolue sont additionnées au signal de sortie (Di) du régulateur de la valeur absolue et que la dérivée de la valeur de consigne de l'angle est formée et est ajoutée, en même temps qu'une fréquence de référence (f) pour le courant de sortie, au signal de sortie (Df) du régulateur de l'angle (figure 5).

9. Montage comportant
    a) un premier convertisseur statique (SR1) raccordé à un réseau,

    b) un second convertisseur statique (SR2) raccordé au premier convertisseur statique par l'intermédiaire d'un circuit intermédiaire de courant (Ld),

    c) un calculateur de grandeurs de commande (CAL), qui calcule, à partir des données de fonctionnement du mutateur et/ou d'une charge raccordée à ce dernier, la valeur absolue et l'angle d'un vecteur courant décrivant le courant de sortie,

    d) des premier et second générateurs de grandeurs pilotes (FG1 et FG2) servant à prédéterminer des première et seconde grandeurs pilotes (i1**, i2**) pour les valeurs de consigne des composantes,

    e) des premier et second générateurs de signaux de marche à régime élevé, qui contiennent des premier et second intégrateurs de marche à régime élevée (INT1, INT2), sur lesquels sont prélevées des première et seconde valeurs de consigne (i1*, i2*) des composantes, ces valeurs de consigne étant réglées sur les grandeurs pilotes respectivement avec une vitesse variable de modification (di1*/dt, di2*/dt),

    f) un convertisseur de coordonnées qui calcule une valeur de consigne (i*) de la valeur absolue et une valeur de consigne (wp*) de l'angle à partir des valeurs de consigne des composantes,

    g) un régulateur (RI) de la valeur absolue, auquel sont envoyées la valeur de consigne de la valeur absolue et la valeur du vecteur somme et sur lequel est prélevé un signal de commande (Uα) pour le premier convertisseur statique (SR1), et

    h) un régulateur (RW) de l'angle, auquel sont envoyées la valeur de consigne de l'angle et l'angle du vecteur courant et au niveau duquel est prélevé un signal de commande (Uf) pour le convertisseur statique situé côté sortie, caractérisé par

    i) un dispositif de réglage pour prédéterminer la vitesse de variation (di2*/dt) de la valeur de consigne (i2*) de la première composante en fonction d'un signal de différence (Df) formé au moyen d'un comparateur, auquel cas une valeur maximale (Ufmax) est présente à la première entrée du comparateur et le signal de commande (Uf) du second convertisseur statique (SR2) est présent à la seconde entrée du comparateur, et la sortie du comparateur est raccordée par l'intermédiaire d'un amplificateur (V2) à un circuit (ME1) de sélection de la valeur minimale, à l'entrée duquel est appliquée une valeur normale réglable (DO), et la sortie du circuit de sélection (ME1) est raccordée à une entrée des premier et second générateurs de signaux de marche à régime éleve.

10. Montage comportant

a) un premier convertisseur statique (SR1) raccordé à un réseau,

b) un second convertisseur statique (SR2) raccordé au premier convertisseur statique par l'intermédiaire d'un circuit intermédiaire de courant (Ld),

c) un calculateur de grandeurs de commande (CAL), qui calcule, à partir des données de fonctionnement du mutateur et/ou d'une charge raccordée à ce dernier, la valeur absolue et l'angle d'un vecteur courant décrivant le courant de sortie,

d) des premier et second générateurs de grandeurs pilotes (FG1 et FG2) servant à prédéterminer des première et seconde grandeurs pilotes (i1**, i2**) pour les valeurs de consigne des composantes,

e) des premier et second générateurs de signaux de marche à régime élevé, qui contiennent des premier et second intégrateurs de marche à régime élevée (INT1, INT2), sur lesquels sont prélevées des première et seconde valeurs de consigne (i1*, i2*) des composantes, ces valeurs de consigne étant réglées sur les grandeurs pilotes respectivement avec une vitesse variable de modification (di1*/dt, di2*/dt),

f) un convertisseur de coordonnées, qui calcule une valeur de consigne (i*) de la valeur absolue et une valeur de consigne (wp*) de l'angle à partir des valeurs de consigne des composantes,

g) un régulateur (RI) de la valeur absolue, auquel sont envoyées la valeur de consigne de la valeur absolue et la valeur du vecteur somme et sur lequel est prélevé un signal de commande (Uα) pour le premier convertisseur statique (SR1), et

h) un régulateur (RW) de l'angle, auquel sont envoyées la valeur de consigne de l'angle et l'angle du vecteur courant et au niveau duquel est prélevé un signal de commande (Uf) pour le convertisseur statique situé côté sortie,

caractérisé par

i) des premier et second dispositifs de formation de différences (V3,V4) servant à former la différence entre le signal de commande pour le premier convertisseur statique et une valeur maximale prédéterminée (Umax) et une valeur minimale prédéterminée (Umin),

j) un circuit de sélection (MIN) servant à sélectionner la valeur la plus faible des deux différences, et

k) un autre dispositif de formation de différence (V2), auquel sont envoyés le signal de commande (Uf) du second convertisseur statique et une valeur maximale prédéterminée (Ufmax) et dont le signal de sortie est introduit en supplément dans le circuit de sélection (MIN).

11. Montage suivant la revendication 10, caractérisé par le fait que le premier générateur de signaux de fonctionnement à régime élevé contient un circuit soustracteur pour la première grandeur pilote (i2**) et la valeur de consigne (i2**) de la composante, un amplificateur et un multiplicateur (MP2) branché en amont de l'entrée de l'intégrateur, et qu'une valeur limite (Vf) formée à partir de la différence est envoyée en outre au multiplicateur.

12. Montage suivant la revendication 11, caractérisé par le fait qu'un circuit (XY) produisant une courbe caractéristique correspondant à la fonction racine carrée est branché en série avec le premier multiplicateur (MP2).

13. Montage suivant la revendication 10, caractérisé par

un second convertisseur statique (SR2), qui possède les condensateurs de commutation (C1,...,C6), un détecteur de la tension de commutation servant à déterminer la tension effective aux bornes du condensateur de commutation, et un générateur de valeurs limites du courant, qui est branché en aval et qui sert à prédéterminer une valeur limite du courant, un circuit comparateur, qui forme, à partir de l'écart de la valeur de consigne de valeur absolue ou de la valeur absolue du vecteur courant, une autre valeur limite (Dz) pour la vitesse de variation de la valeur de consigne (i2*) de la première composante, et

un circuit de sélection de valeur minimale (ME8), qui est raccordé côté entrée d'une part au circuit comparateur et d'autre part à la sortie de l'amplificateur (V1) du second générateur de signaux de fonctionnement à régime élevé.

14. Montage suivant la revendication 13, caractérisé par le fait que le détecteur de la tension de commutation est alimenté par le calculateur de grandeurs de commande et est déclenché par les impulsions d'amorçage du second convertisseur statique.

**15.** Montage suivant la revendication 13, caractérisé par un détecteur de l'autre valeur limite et un circuit dynamique, déclenché par le signal de sortie du détecteur et qui, dans le cas d'une réduction de l'autre valeur limite, applique une grandeur pilote auxiliaire, accrue de façon transitoire, au second générateur de production de signaux de fonctionnement à régime élevé pour accroître de façon transitoire la valeur de consigne (i1*) de la seconde composante.

**16.** Montage suivant la revendication 10, caractérisé par un autre convertisseur de coordonnées qui calcule la variation de la valeur de consigne de la valeur absolue et la variation de la valeur de consigne de l'angle, un premier circuit de commande pilote, auquel sont envoyés le signal de sortie (Di) du régulateur (RI) de la valeur absolue, la variation (dwp*/dt) de la valeur de consigne de la valeur absolue et un signal pour la tension (UD) du circuit intermédiaire, et sur lequel est prélevée la tension (Uα) du premier convertisseur statique (SR1), et un second circuit de commande pilote, auquel sont envoyés le signal de sortie (Df) du régulateur (RW) de l'angle, la variation de la valeur de consigne de l'angle (dwp*/dt) et un signal de fréquence de référence (f) préparé par le calculateur (CAL) de la grandeur de commande, et sur lequel est prélevée la tension de commande (Uf) du second convertisseur statique (SR2).

**17.** Montage suivant la revendication 9, caractérisé par le fait qu'à la sortie du second convertisseur statique est raccordée une machine à champ tournant (M).

**18.** Montage comportant
a) un premier convertisseur statique (SR1) raccordé à un réseau,
b) un second convertisseur statique (SR2) raccordé au premier convertisseur statique par l'intermédiaire d'un circuit intermédiaire de courant (Ld),
c) un calculateur de grandeurs de commande (CAL), qui calcule, à partir des données de fonctionnement du mutateur et/ou d'une charge raccordée à ce dernier, la valeur absolue et l'angle d'un vecteur courant décrivant le courant de sortie,
d) des premier et second générateurs de grandeurs pilotes (FG1 et FG2) servant à prédéterminer des première et seconde grandeurs pilotes (i1**, i2**) pour les valeurs de consigne des composantes,

e) des premier et second générateurs de signaux de marche à régime élevé, qui contiennent des premier et second intégrateurs de marche à régime élevée (INT1, INT2), sur lesquels sont prélevées des première et seconde valeurs de consigne (i1*, i2*) des composantes, ces valeurs de consigne étant réglées sur les grandeurs pilotes respectivement avec une vitesse variable de modification (di1*/dt, di2*/dt),
f) un convertisseur de coordonnées qui calcule une valeur de consigne (i*) de la valeur absolue et une valeur de consigne (wp*) de l'angle à partir des valeurs de consigne des composantes,
g) un régulateur (RI) de la valeur absolue, auquel sont envoyées la valeur de consigne de la valeur absolue et la valeur du vecteur somme et sur lequel est prélevé un signal de commande (Uα) pour le premier convertisseur statique (SR1), et
h) un régulateur (RW) de l'angle, auquel sont envoyées la valeur de consigne de l'angle et l'angle du vecteur courant et au niveau duquel est prélevé un signal de commande (Uf) pour le convertisseur statique situé côté sortie,
caractérisé par
i) un détecteur de la tension de commutation servant à déterminer la tension effective aux bornes du condensateur de commutation, et un générateur de valeurs limites de courant branché en aval et servant à déterminer une valeur limite du courant,
j) un circuit comparateur qui forme, à partir de l'écart entre la valeur de consigne de la valeur absolue ou la valeur du vecteur courant, une valeur limite pour la vitesse de variation de la valeur de consigne de la première composante, et
k) un circuit (MA2) de sélection de la valeur maximale, en aval duquel sont branchés des circuits (xyl) délivrant des courbes caractéristiques et qui réduisent, dans le générateur de signaux de fonctionnement à régime élevé, la vitesse de variation de la valeur de consigne de la première composante en fonction de sa valeur limite.

**19.** Montage suivant la revendication 18, caractérisé par un dispositif de formation de différence (V1) pour l'écart de la valeur de consigne (i2*) de la première composante par rapport à la première grandeur pilote (i2**), et par un générateur de courbes caractéristiques, qui est branché en aval et dont le signal de sortie est envoyé à des moyens servant à limiter la vitesse de variation du premier générateur de signaux de marche à régime élevé.

20. Montage comportant

a) un premier convertisseur statique (SR1) raccordé à un réseau,

b) un second convertisseur statique (SR2) raccordé au premier convertisseur statique par l'intermédiaire d'un circuit intermédiaire de courant (Ld),

c) un calculateur de grandeurs de commande (CAL), qui calcule, à partir des données de fonctionnement du mutateur et/ou d'une charge raccordée à ce dernier, la valeur absolue et l'angle d'un vecteur courant décrivant le courant de sortie,

d) des premier et second générateurs de grandeurs pilotes (FG1 et FG2) servant à prédéterminer des première et seconde grandeurs pilotes (i1***, i2***) pour les valeurs de consigne des composantes,

e) des premier et second générateurs de signaux de marche à régime élevé, qui contiennent des premier et second intégrateurs de marche à régime élevée (INT1, INT2), sur lesquels sont prélevées des première et seconde valeurs de consigne (i1*, i2*) des composantes, ces valeurs de consigne étant réglées sur les grandeurs pilotes respectivement avec une vitesse variable de modification (di1*/dt, di2*/dt),

f) un convertisseur de coordonnées, qui calcule une valeur de consigne (i*) de la valeur absolue et une valeur de consigne (wp*) de l'angle à partir des valeurs de consigne des composantes,

g) un régulateur (RI) de la valeur absolue, auquel sont envoyées la valeur de consigne de la valeur absolue et la valeur du vecteur somme et sur lequel est prélevé un signal de commande (Uα) pour le premier convertisseur statique (SR1), et

h) un régulateur (RW) de l'angle, auquel sont envoyées la valeur de consigne de l'angle et l'angle du vecteur courant et au niveau duquel est prélevé un signal de commande (Uf) pour le convertisseur statique situé côté sortie,

caractérisé par

i) un circuit délivrant une courbe caractéristique correspondant à la fonction racine carrée, branché en amont de l'intégrateur à régime élevé du premier générateur de signaux de fonctionnement à régime élevé.

FIG 1

FIG 2

FIG 3

FIG 4

FIG 5

EP 0 281 788 B1

FIG 6

FIG 7

FIG 8

FIG 9

FIG 10

FIG 11

FIG 12

FIG 13

FIG 15

FIG 14

FIG 16

FIG 17

**FIG 18**